(19) Europäisches Patentamt
European Patent Office
Office européen des brevets

(11) EP 3 458 489 B1

(12) **EUROPEAN PATENT SPECIFICATION**

(45) Date of publication and mention of the grant of the patent:
**23.12.2020 Bulletin 2020/52**

(21) Application number: **17724430.8**

(22) Date of filing: **15.05.2017**

(51) Int Cl.:
***C08F 220/06*** *(2006.01)* ***C04B 24/26*** *(2006.01)*

(86) International application number:
**PCT/GB2017/051353**

(87) International publication number:
**WO 2017/199010 (23.11.2017 Gazette 2017/47)**

(54) **COPOLYMER FOR USE AS CEMENT ADDITIVE AND METHOD OF PREPARATION THEREOF**

COPOLYMER ZUR VERWENDUNG ALS ZEMENTADDITIV UND VERFAHREN ZUR HERSTELLUNG DAVON

COPOLYMÈRE DESTINÉ À ÊTRE UTILISÉ COMME ADDITIF POUR CIMENT ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2016 GB 201608952**

(43) Date of publication of application:
**27.03.2019 Bulletin 2019/13**

(73) Proprietor: **Devine Chemicals Limited**
**Consett, County Durham DH8 7PW (GB)**

(72) Inventors:
- **SINGH, Michael**
**Bradford**
**West Yorkshire BD7 1HR (GB)**
- **FARRAR, David**
**Bradford**
**West Yorkshire BD7 1HR (GB)**

(74) Representative: **HGF**
**1 City Walk**
**Leeds LS11 9DX (GB)**

(56) References cited:
**EP-A1- 0 549 280 US-A1- 2013 231 415**

- **DATABASE WPI Week 201211 Thomson Scientific, London, GB; AN 2011-Q37391 XP002771263, & CN 102 250 295 A (CHINA CONSTR THIRD ENG BUREAU CO LTD) 23 November 2011 (2011-11-23)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 458 489 B1

## Description

This invention relates to a polymer, in particular a polymer that is useful as a cement additive. In particular, the invention relates to a polymer produced by copolymerisation of an olefinic mono-carboxylic acid or salt thereof, an acrylamide sulfonic acid or salt thereof, and an allylic sulfonic acid or salt thereof. The invention also relates to a method of making such a polymer, a composition comprising such a polymer and cement or a cementitious slurry, use of such a polymer as an additive to a cementitious material, and a cementitious material comprising such a polymer.

## BACKGROUND

It is desirable in many construction and oil well drilling applications to have cement compositions of controlled fluidity (or self-levelling) which are capable of setting to produce concrete of high early and final compressive strength and of low shrinkage. The compressive strength is typically inversely proportional to the level of water used in the unset cement composition. A lower ratio of water:cement results in higher compressive strengths; however, lower levels of water also decreases the workability of the cement. The degree of cement workability can be measured as the deformity (consistence) of the cement slump.

Additives may be introduced into the unset cement mixtures to enable a reduction of the water:cement ratio while maintaining workability. Such additives are known as water reducing agents or superplasticisers. Many classes of superplasticisers are known in the art, including melamine sulfonate-formaldehyde condensates (SMF), naphthalenesulfonate-formaldehyde condensates (SNF), modified lignosulfonates (MLS), polysaccharides and polyacrylic based products. Of the polyacrylic based products class, some polycarboxylate ethers (PCE) are considered efficient cement superplasticisers. US 5,614,017 discloses substances useful as water reducing and superplasticiser additives for cement compositions, formed by reaction of carboxylic acid polymers with polyethers of $C_2$-$C_4$ epoxides.

The effects of chemical structures of graft copolymer on cement-dispersing performance have been investigated in addition to the effects of the graft chain length in the fluidity of the cement composition (Nawa, T, Journal of Advanced Concrete Technology, vol. 4 (2), 2006, p225-232). Superior cement workability performance of PCE cement superplasticisers may be attributed to the ability of the extended graft chains of the PCE polymers to effect cement particle dispersion by steric stabilisation.

The selection of concrete superplasticiser may relate to the type of concrete used, such as ready mix, precast, high strength, high performance, gypsum, self-compacting, shotcrete, etc.. The SMF, SNF, and MLS classes of superplasticisers suffer from a number of disadvantages. For example, these concrete superplasticisers typically provide high slump loss and generally do not work efficiently in cold weather conditions. The PCE superplasticisers may provide better performance as concrete additives, for example they may permit a reduction of up to 40% of the water content of the poured cement. PCEs are also typically preferred to SMF, SNF, and MLS in both hot and cold weather conditions.

Copolymers have also been used as cement additives. JP 05032441 describes cement admixtures comprising a copolymer of N-substituted-$\alpha,\beta$-unsaturated monocarboxylic amide derivatives. JP 60171256 discloses admixtures containing a copolymer prepared from $\alpha,\beta$-unsaturated monocarboxylic acid amide N-substituted with a sulfonic acid moiety, giving a Portland cement composition showing improved flow. US 2013/0231415 discloses copolymers as slump retention agents for hydraulic compositions such as cement, mortar and concrete. The copolymers may be used alone or in combination with a water reducing agent or slump retaining agent, e.g. a superplasticiser.

US 2013/231415 relates to copolymers effective as slump retention agents for hydraulic compositions such as cement, mortar and concrete. EP0549280 relates to cement dispersion agents containing a graft copolymer composed of four kinds of constituent unit which can provide improved fluidity to cementing compositions, prevent slump loss after the kneading process and reduce the drying shrinkage of hardened concrete produced at the same time. CN 102250295 relates to a concrete super plasticiser for machine-made sand and a preparation method thereof.

PCEs do, however, suffer from disadvantages such as high manufacturing and commercial costs when compared with other class of superplasticisers. Synthesis of such materials often involves multiple process steps and high temperature processes and hence it has been desirable to come up with new superplasticisers which are an improvement over the current art. Furthermore, a disadvantage of known copolymer and terpolymer cement additives is the poor cement workability (measured as a low slump) and poor early and final compressive concrete strengths compared to the PCE class of superplasticiser. There is therefore a need to identify improved and/or alternative superplasticisers and also a need to identify improved methods of synthesis for concrete additives, such as superplasticisers.

## BRIEF SUMMARY OF THE DISCLOSURE

The invention as laid down in the present disclosure is defined by the claims. In accordance with a first aspect of the invention, there is provided a polymer for use as a cement additive. The polymer is produced by copolymerisation of monomers of formula (I), (II) and (III):

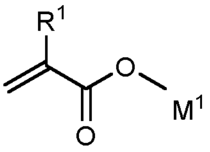 (I), 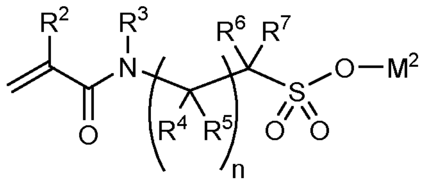 (II),

and

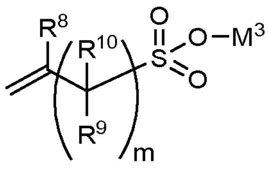 (III).

$R^1$, $R^2$ and $R^8$ are each independently selected from -H, $-CH_3$, and $-CH_2CH_3$. $R^3$, $R^4$, $R^5$, $R^6$, $R^7$, $R^9$ and $R^{10}$ are each independently selected from -H, $-(C_2-C_6)$alkyl and - $(C_1-C_8)$alkyl; m is 1, 2, 3, 4, 5, 6, 7 or 8; n is 0, 1, 2, 3, 4, 5, 6, 7 or 8; and each of $M^1$, $M^2$ and $M^3$ is independently H or a cation. The polymer comprises 1-98 wt% of (I), 1-98 wt% of (II) and 1-98 wt% of (III). The polymer is substantially linear.

The polymer may be provided in a liquid form, e.g. in an aqueous solution. The polymer may be provided in a solid form, e.g. as a powder, which may be obtained by spray drying a liquid form of the polymer. The polymer is substantially linear and the polymer may also be water soluble, e.g. the polymer may be both substantially linear and water soluble.

The polymer may be formed from the monomer blend in any conventional manner. It may be pre-formed and then dissolved to form a polymer solution. For example, it may be formed by water-in-oil emulsion polymerisation if the monomer blend is insufficiently soluble (e.g. insoluble) in the water. Preferably the polymer is formed by polymerisation of the monomer blend in a solution polymerisation process, e.g. the polymer may be formed by aqueous solution polymerisation.

The water soluble polymer may be provided as an aqueous solution. The polymer may be provided at a concentration of 10 - 50 wt% of the solution, e.g. the polymer may be provided at a concentration of 30 - 40 wt% of the solution. The polymer may be formed by any suitable polymerisation technique, such as gel polymerisation, inverse suspension bead polymerisation, precipitation polymerisation or solution polymerisation. Polymerisation of an aqueous solution of the monomer or monomer blend may be the most convenient technique, for example because it avoids an additional dissolution step that would be required to provide the polymer at the desired concentration when the polymer is provided in an aqueous solution accordance with the disclosure.

A second aspect of the invention provides a method of forming a polymer. The method comprises forming a polymerisation mixture comprising monomers of formulae (I), (II) and (III) and at least one radical initiator; activating the at least one radical initiator; and allowing the reaction to proceed.

The monomers of formulae (I), (II) and (III) are defined as follows:

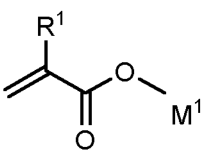 (I), 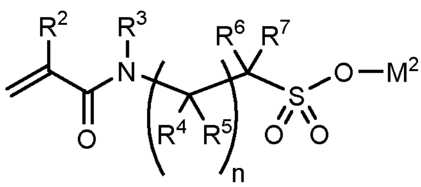 (II),

and

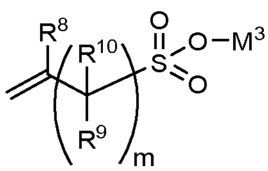 (III).

$R^1$, $R^2$ and $R^8$ are each independently selected from -H, $-CH_3$, and $-CH_2CH_3$. $R^3$, $R^4$, $R^5$, $R^6$, $R^7$, $R^9$ and $R^{10}$ are each independently selected from -H, $-(C_2-C_6)$alkyl and - $(C_1-C_8)$alkyl; m is 1, 2, 3, 4, 5, 6, 7 or 8; n is 0, 1, 2, 3, 4, 5, 6, 7 or 8; and each of $M^1$, $M^2$ and $M^3$ is independently H or a cation. The relative amounts of the monomers comprise 1-98 wt% of (I), 1-98 wt% of (II) and 1-98 wt% of (III).

The method comprises providing at least one radical initiator, for example a conventional radical initiator. The at least one radical initiator may comprise sodium persulfate. The method may optionally comprise providing at least one chain transfer agent to give the desired molecular weight. The chain transfer reagent may comprise sodium metabisulfite. The monomers, at least one radical initiator and (when present) chain transfer agent may be provided to the mixture in a continuous manner or in a step-wise manner. Continuous addition of the monomers allows the reaction to proceed at a controlled temperature.

The polymerisation method may employ a free rise technique, where all the monomers are mixed, stirred in a reactor at a specific temperature and the free radical initiator(s) may be simultaneously added to the polymerisation mixture and the polymerisation reaction is allowed to proceed. In an embodiment, the initiator(s) is added before the monomers. In another embodiment, the free radical initiator(s) may be added in a step-wise manner to the polymerisation mixture and the polymerisation reaction is allowed to proceed. Alternatively, the free radical initiator(s) may be added continuously over a period of time. In an embodiment, the chain transfer agent is added at the same time as the free radical initiator(s). The polymerisation method may employ a continuous addition technique, which involves the controlled feed of the monomer and or the initiator(s) to a reactor that may contain a solvent at a specific temperature and or a mixture of monomers and or initiators, such polymerisation processes could be conducted at a fixed temperature or allowed to rise to a specific temperature.

The activating may comprise heating the at least one initiator to an activation temperature, wherein the reaction temperature is at least 40°C, optionally at least 50°C, further optionally at least 60°C. The allowing the polymerisation to proceed may comprise maintaining the polymerisation mixture at the initiation temperature and/or heating the polymerisation mixture to the activation temperature. The polymerisation reaction may occur over a period of time of at least 30 minutes, optionally over a period of time of at least 1 hour, further optionally over a period of time of at least 2 hours. The polymerisation reaction may occur over a period of time of not more than 15 hours, optionally over a period of time of not more than 10 hours, further optionally over a period of time of not more than 6 hours. The polymerisation reaction may occur over a period of time of from 1 to 10 hours, or the polymerisation reaction may occur over a period of from 2 to 6 hours.

Allowing polymerisation to proceed may comprise maintaining the temperature at a reaction temperature for a specified period of time. The reaction temperature may be up to 100°C. The reaction temperature may be at least 40°C, optionally at least 50°C, further optionally at least 60°C. The specified period of time may be in the range of from 1 to 24 hours, optionally from 1 to 20 hours, further optionally from 1 to 15 hours, still further optionally from 1 to 10 hours. The specified period of time may be in the range of from 2 to 20 hours, optionally from 2 to 15 hours, further optionally from 2 to 10 hours, still further optionally from 3 to 5 hours.

The method may further comprise cooling the mixture to ambient temperature after allowing the polymerisation to proceed. The method may further comprising spray drying the polymer formed. The spray drying may provide the polymer in a solid form. Alternative methods of drying a polymer into a powder from are known to those who practice the art e.g. drum drying, fluid bed drying, freeze drying, precipitation etc.

A third aspect of the invention provides a polymer obtainable by a method of the invention. A fourth aspect provides a polymer obtained by a method of the invention.

A fourth aspect provides a composition comprising a polymer of the invention and a cementitious material.

A fifth aspect provides use of a polymer of the invention as an additive to a cementitious material.

## BRIEF DESCRIPTION OF THE DRAWINGS

Embodiments of the invention are further described hereinafter with reference to the accompanying drawings, in which:

Figure 1 illustrates an exemplary slump test apparatus, typically a metal mould in the shape of a frustrum of a cone.

Figure 2 illustrates the GPC trace of the Example 2 product.

Figure 3 illustrates the types of slump test results expected for fresh concrete, collapse (a), shear slump (b) and true slump (c).

Figure 4 illustrates the slump performance for cement type A prepared using superplasticiser additives commercial PCE1, commercial PCE 2, or the superplasticiser of Example 2 at a water/cement ratio of 0.27 and a superplasticiser

dosage of 0.25%.

Figure 5 illustrates the slump performance for cement type A prepared using superplasticiser additives commercial PCE1, commercial PCE 2, or the superplasticiser of Example 2 at a water/cement ratio of 0.27 and a superplasticiser dosage of 0.33%.

Figure 6 illustrates the compressive strength (N/$mm^2$) for cement type A prepared as a control (no addition of superplasticiser), using superplasticiser additives commercial PCE1, commercial PCE 2, or the superplasticiser of Example 2 at a water/cement ratio of 0.27 and a superplasticiser dosage of 0.5% after 1 day and after 28 days.

Figure 7 illustrates the compressive strength (N/$mm^2$) for cement type A prepared as a control (no addition of superplasticiser), using superplasticiser additives commercial PCE1, commercial PCE 2, or the superplasticiser of Example 2 at a water/cement ratio of 0.33 and a superplasticiser dosage of 0.5% after 28 days.

Figure 8 illustrates the shrinkage (mm/m) for cement type A prepared as a control (no addition of superplasticiser), using superplasticiser additives commercial PCE1, commercial PCE 2, or the superplasticiser of Example 2 at a water/cement ratio of 0.27 and a superplasticiser dosage of 0.5%.

Figure 9 illustrates the shrinkage (mm/m) for cement type A prepared as a control (no addition of superplasticiser), using superplasticiser additives commercial PCE1, commercial PCE 2, or the superplasticiser of Example 2 at a water/cement ratio of 0.33 and a superplasticiser dosage of 0.5%.

Figure 10 illustrates the slump performance for cement type G prepared using superplasticiser additives commercial PCE1, commercial PCE 2, or the superplasticiser of Example 2 at a water/cement ratio of 0.27 and a superplasticiser dosage of 0.5%.

Figure 11 illustrates the slump performance for cement type G prepared using superplasticiser additives commercial PCE1, commercial PCE 2, or the superplasticiser of Example 2 at a water/cement ratio of 0.33 and a superplasticiser dosage of 0.5%.

Figure 12 illustrates the compressive strength (N/$mm^2$) for cement type G prepared as a control (no addition of superplasticiser), using superplasticiser additives commercial PCE1, commercial PCE 2, or the superplasticiser of Example 2 at a water/cement ratio of 0.27 and a superplasticiser dosage of 0.5% after 28 days.

Figure 13 illustrates the compressive strength (N/$mm^2$) for cement type G prepared as a control (no addition of superplasticiser), using superplasticiser additives commercial PCE1, commercial PCE 2, or the superplasticiser of Example 2 at a water/cement ratio of 0.33 and a superplasticiser dosage of 0.5% after 28 days.

Figure 14 illustrates the shrinkage (mm/m) for cement type G prepared as a control (no addition of superplasticiser), using superplasticiser additives commercial PCE1, commercial PCE 2, or the superplasticiser of Example 2 at a water/cement ratio of 0.27 and a superplasticiser dosage of 0.5%.

## DETAILED DESCRIPTION

Given below are definitions of terms used in this application. Any term not defined herein takes the normal meaning as the skilled person would understand the term.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying

claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

For the avoidance of doubt, it is hereby stated that the information disclosed earlier in this specification under the heading "Background" is relevant to the invention and is to be read as part of the disclosure of the invention.

## DEFINITIONS

The term "alkyl" refers to a linear or branched hydrocarbon chain. For example, the term "$C_{1-3}$ alkyl" refers to a linear or branched hydrocarbon chain containing 1, 2 or 3 carbon atoms, for example methyl, ethyl, n-propyl and iso-propyl. Alkylene groups may likewise be linear or branched and may have two places of attachment to the remainder of the molecule. Furthermore, an alkylene group may, for example, correspond to one of those alkyl groups listed in this paragraph. The alkyl and alkylene groups may be unsubstituted or substituted by one or more substituents. Possible substituents are described below. Substituents for the alkyl group may be halogen, e.g. fluorine, chlorine, bromine and iodine, OH, $C_{1-3}$ alkoxy.

The term "cation" refers to a monoatomic or polyatomic species having one or more elementary charges of the proton.

The term "cement" or "cements" means a material that is a binder, a substance that sets and hardens and can bind other materials together. A cement may be formed by calcining lime and similar minerals. Exemplary cement or cements include ordinary cements, quick-hardening cements, Portland cements, alumina cement, blast furnace slag cement, flask cement, gypsum plaster slurries and cement employed in oil well applications.

The term "cementitious material" refers to a material which may be mixed with a liquid, such as water, to form a cement base substance, and to which an aggregate may be added and includes cements, limes, and mortars. A cementitious material may also include such materials when mixed with liquid and / or aggregates. Exemplary cementitious materials include cements (e.g. ordinary cements, quick-hardening cements, Portland cements, alumina cement, blast furnace slag cement, flask cement and cement employed in oil well applications), gypsum plaster slurries, mortars, coal slurries, pozzolans, fly ash and concrete.

The term "Mw" refers to the weight average molecular weight of a polymer and the term "Mn" refers to the number average molecular weight of a polymer. The term "PD" refers to the polydispersity index (or polydispersity) of a polymer. These may be determined for a polymer according to the following equations:

$$Mn = \frac{\Sigma N_i M_i}{\Sigma N_i} ; \qquad Mw = \frac{\Sigma N_i M_i^2}{\Sigma N_i M_i} ; \qquad PD = Mw/Mn$$

where $M_i$ is the molecular weight of a chain and $N_i$ is the number of chains of that molecular weight.

The term "superplasticiser" or "plasticiser" (which may be used interchangeably herein) refer to a substance that may be added to a cementitious material (e.g. cement) to improve the workability of cementitious material at reduced water-cement ratio. The workability of the cementitious material may be measured by a standard method, such as slump, measured in accordance with standard ASTM C157-08.

Where a compound, moiety, process or product is described as "optionally" having a feature, the disclosure includes such a compound, moiety, process or product having that feature and also such a compound, moiety, process or product not having that feature. Thus, when a moiety is described as "optionally substituted", the disclosure comprises the unsubstituted moiety and the substituted moiety.

Where two or more moieties are described as being "independently" or "each independently" selected from a list of atoms or groups, this means that the moieties may be the same or different. The dentity of each moiety is therefore independent of the identities of the one or more other moieties.

## POLYMERS

The applicant has surprisingly identified that the polymers of the invention are particularly suitable for use as cement additives, in particular as cement superplasticisers. When polymers of the invention are used appropriately as cement additives, they may provide good workability (e.g. as measured by slump). When the polymers of the invention are used appropriately as cement additives, they may provide high compressive strength. When the polymers of the invention are used appropriately as cement additives, they may provide low shrinkage.

In accordance with an aspect of the invention there is provided a polymer for use as a cement additive. This polymer is produced by copolymerisation of monomers of formula (I), (II) and (III):

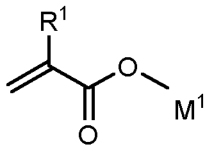

(I),

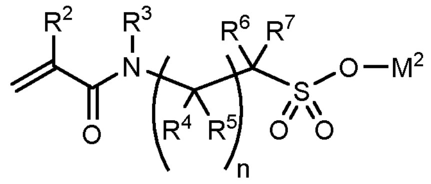

(II),

and

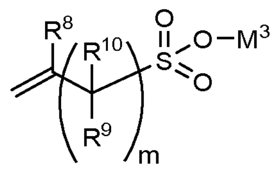

(III).

$R^1$, $R^2$ and $R^8$ are each independently selected from -H, $-CH_3$, and $-CH_2CH_3$. $R^3$, $R^4$, $R^5$, $R^6$, $R^7$, $R^9$ and $R^{10}$ are each independently selected from -H, $-(C_2-C_6)$alkyl and - $(C_1-C_8)$alkyl; m is 1, 2, 3, 4, 5, 6, 7 or 8; n is 0, 1, 2, 3, 4, 5, 6, 7 or 8; and each of $M^1$, $M^2$ and $M^3$ is independently H or a cation. The polymer comprises 1-98 wt% of (I), 1-98 wt% of (II) and 1-98 wt% of (III). The polymer is substantially linear.

The polymer may be provided in a liquid form, e.g. in an aqueous solution. The polymer may be provided in a solid form, e.g. as a powder, which may be obtained or obtainable by spray drying a liquid form of the polymer. Drying of the polymer into a powder is obtainable by known methods including for example drum drying, fluid bed drying, freeze drying and precipitation.

$R^1$, $R^2$ and $R^8$ may each be independently selected from -H and $-CH_3$. For example, $R^1$ may be -H, and / or $R^2$ may be -H, and/or $R^8$ may be -H. For example, $R^1$ may be $-CH_3$, and / or $R^2$ may be $-CH_3$, and/or $R^8$ may be $-CH_3$. $R^1$ may be -H or $-CH_3$. $R^2$ may be -H or $-CH_3$. $R^8$ may be -H or $-CH_3$.

$R^3$ may be independently selected from -H, $-CH_3$ or $-CH_2CH_3$. $R^3$ may be $-CH_3$. $R^3$ may be -H.

$R^4$ and $R^8$ may each be independently selected from -H, $-CH_3$ or $-CH_2CH_3$. $R^4$ and/or $R^5$ may be $-CH_3$. $R^4$ and/or $R^5$ may be -H. $R^4$ and/or $R^8$ may be $-CH_2CH_3$.

$R^6$ and $R^7$ may each be independently selected from -H or $-CH_3$. For example, $R^6$ may be -H, and / or $R^7$ may be -H. For example, $R^6$ may be $-CH_3$, and / or $R^7$ may be $-CH_3$.

$R^9$ and $R^{10}$ may each be independently selected from -H or $-CH_3$. For example, $R^9$ may be -H, and / or $R^{10}$ may be -H. For example, $R^9$ may be $-CH_3$, and / or $R^{10}$ may be $-CH_3$.

m may be 1, 2, 3, 4, 5 or 6. m may be 1, 2, 3 or 4; for example m may be 1, 2 or 3 (e.g. m may be 1 or 2). m may be 1. m may be 2. $R^8$, $R^9$ and $R^{10}$ may each be independently selected from -H or $-CH_3$; and m may be 1 or 2. For example, $R^8$ may be selected from -H or $-CH_3$; $R^9$ and $R^{10}$ may each be -H; and m may be 1. For example, $R^8$, $R^9$ and $R^{10}$ may each be -H; and m may be 1.

n may be 0, 1, 2, 3, 4, 5 or 6. n may be 0, 1, 2, 3 or 4 (e.g. 1, 2, 3 or 4); for example n may be 1, 2 or 3 (e.g. n may be 1 or 2). n may be 1. n may be 2. $R^2$, $R^3$, $R^6$ and $R^7$ may each be independently selected from -H, or $-CH_3$; $R^4$ and $R^5$ may each be independently selected from -H, $-CH_3$, or $-CH_2CH_3$; and n may be 1 or 2. For example, $R^2$ and $R^3$ may each be independently selected from -H, or $-CH_3$; $R^6$ and $R^7$ may be -H; $R^4$ and $R^5$ may be $-CH_3$; and n may be 1. For example, $R^2$, $R^3$, $R^6$ and $R^7$ may be -H; $R^4$ and $R^8$ may be $-CH_3$; and n may be 1.

$M^1$, $M^2$ and $M^3$ may each be independently selected from H, a monovalent cation and a divalent cation. When any of $M^1$ and/or $M^2$ and/or $M^3$ are multivalent cations (e.g. divalent or trivalent cations) it is understood that the stoichiometry of $M^1$ and/or $M^2$ and/or $M^3$ to the remainder of the components in formulae (I), (II) and (III) as appropriate are adjusted as appropriate to ensure charge neutrality in formulae (I), (II) and (III). $M^1$, $M^2$ and $M^3$ may each be independently selected from H and a monovalent cation. $M^1$, $M^2$ and $M^3$ may each be independently selected from H, $Na^+$ and $K^+$. For example, $M^1$ and/or $M^2$ and/or $M^3$ may each be H. For example, $M^1$ and/or $M^2$ and/or $M^3$ may each be $Na^+$. For example, $M^1$ and/or $M^2$ and/or $M^3$ may each be $Na^+$. $M^1$ and/or $M^2$ and/or $M^3$ may comprise a mixture of H and a cation (e.g. a mixture of H and a monovalent cation). For example, $M^1$ and/or $M^2$ and/or $M^3$ may comprise a mixture of H and $Na^+$ or $K^+$; e.g. $M^1$ and/or $M^2$ and/or $M^3$ may comprise a mixture of H and $Na^+$.

$R^1$, $R^2$, $R^3$, $R^6$, $R^7$ and $R^8$, $R^9$ and $R^{10}$ may each be independently selected from -H or $-CH_3$; $R^4$ and $R^5$ may each be independently selected from -H, $-CH_3$, or $-CH_2CH_3$; m may be 1 or 2; and n may be 1 or 2. $R^1$, $R^2$, $R^3$, $R^6$, $R^7$

and $R^8$, $R^9$ and $R^{10}$ may each be independently selected from -H or $-CH_3$; $R^4$ and $R^5$ may each be independently selected from -H, $-CH_3$, or $-CH_2CH_3$; m may be 1 or 2; n may be 1 or 2; and $M^1$, $M^2$ and $M^3$ may each be independently selected from H and a monovalent cation (e.g. $M^1$, $M^2$ and $M^3$ may each be independently selected from H, $Na^+$ and $K^+$).

$R^1$, $R^2$, $R^3$, $R^6$, $R^7$ and $R^8$, $R^9$ and $R^{10}$ may each be -H; $R^4$ and $R^8$ may each be $-CH_3$; m may be 1; and n may be 1. $R^1$, $R^2$, $R^3$, $R^6$, $R^7$ and $R^8$, $R^9$ and $R^{10}$ may each be -H; $R^4$ and $R^8$ may each be $-CH_3$; m may be 1; n may be 1; and $M^1$, $M^2$ and $M^3$ may each be independently selected from H and a monovalent cation (e.g. $M^1$, $M^2$ and $M^3$ may each be independently selected from H, $Na^+$ and $K^+$). $R^1$, $R^2$, $R^3$, $R^6$, $R^7$ and $R^8$, $R^9$ and $R^{10}$ may each be -H; $R^4$ and $R^5$ may each be $-CH_3$; m may be 1; n may be 1; and $M^1$, $M^2$ and $M^3$ may each be independently selected from H and $Na^+$ (e.g. $M^1$ may be H, $M^2$ may be $Na^+$ and $M^3$ may be $Na^+$).

The monomer of formula (I) may comprise a mixture of at least two different components (i.e. monomers) of formula (I). For example, the monomer of formula (I) may comprise two or three, e.g. two, different components of formula (I). The monomer of formula (II) may comprise a mixture of at least two different components (i.e. monomers) of formula (II). For example, the monomer of formula (II) may comprise two or three, e.g. 2, different components of formula (II). The monomer of formula (III) may comprise a mixture of at least two different components (i.e. monomers) of formula (III). For example, the monomer of formula (III) may comprise two or three, e.g. 2, different components of formula (III). When a monomer comprises more than one component of a specified formula, each of the components differs in the definition of at least one substituent.

At least one component of formula (I) may be acrylic acid and/or a salt thereof. For example, at least one component of formula (I) may be acrylic acid. For example, least one component of formula (I) may be a salt of acrylic acid. For example, formula (I) may comprise or consist of acrylic acid and at least one salt thereof.

At least one component of formula (II) may be 2-acrylamido-2-methylpropane-1-sulfonic acid and/or a salt thereof. For example, at least one component of formula (II) may be 2-acrylamido-2-methylpropane-1-sulfonic acid. For example, at least one component of formula (II) may be a salt of 2-acrylamido-2-methylpropane-1-sulfonic acid. For example, formula (II) may comprise or consist of 2-acrylamido-2-methylpropane-1-sulfonic acid and at least one salt thereof.

At least one component of formula (III) may be 2-propene-1-sulfonic acid monomer and/or a salt thereof. For example, at least one component of formula (III) may be 2-propene-1-sulfonic acid monomer. For example, at least one component of formula (III) may be a salt of 2-propene-1-sulfonic acid monomer. For example, formula (III) may comprise or consist of 2-propene-1-sulfonic acid monomer and at least one salt thereof.

The polymer may have a specified weight average molecular weight (Mw). The polymer may have a Mw of at least 1,000 g/mol or of at least 2,000 g/mol. For example the polymer may have a Mw of at least 3,000 g/mol or of at least 4,000 g/mol, e.g. the polymer may have a Mw of at least 5,000 g/mol. The polymer may have an Mw of not more than 150,000 g/mol, 100,000 g/mol, 75,000 g/mol, or 50,000 g/mol; e.g. an Mw of not more than 50,000 g/mol, 40,000 g/mol, 30,000 g/mol or 20,000 g/mol. For example, the polymer may have an Mw of not more than 100,000 g/mol, or an Mw of not more than 50,000 g/mol.

The polymer may have a Mw in the range 1,000 - 150,000 g/mol. The polymer may have an Mw in the range 1000 - 100,000 g/mol. The polymer may have an Mw in the range 5,000 - 100,000 g/mol. The polymer may have an Mw in the range 10,000 - 100,000 g/mol. The polymer may have an Mw in the range 1,000 - 50,000 g/mol. The polymer may have an Mw in the range 2,000 - 50,000 g/mol. The polymer may have an Mw in the range 5,000 - 50,000 g/mol. The polymer may have an Mw in the range 10,000 - 50,000 g/mol. The polymer may have an Mw in the range 2,000 - 40,000 g/mol. The polymer may have an Mw in the range 5,000 - 40,000 g/mol. The polymer may have an Mw in the range 10,000 - 40,000 g/mol. The polymer may have an Mw in the range 3,000 - 30,000 g/mol. The polymer may have an Mw in the range 5,000 - 30,000 g/mol. The polymer may have an Mw in the range 10,000 - 30,000 g/mol. The polymer may have an Mw in the range 5,000 - 25,000 g/mol. The polymer may have an Mw in the range 10,000 - 25,000 g/mol. The polymer may have an Mw in the range 10,000 - 15,000 g/mol.

The polymer may be present at a specified Mn. The polymer may have an Mn in the range of 2,000 - 40,000 g/mol. The polymer may have an Mn in the range of 2,000 - 20,000 g/mol. The polymer may have an Mn in the range of 3,000 - 20,000 g/mol. The polymer may have an Mn in the range of 4,000 - 20,000 g/mol. The polymer may have an Mn in the range 2,000 - 15,000 g/mol. The polymer may have an Mn in the range 4,000 - 15,000 g/mol. The polymer may have an Mn in the range 5,000 - 15,000 g/mol. The polymer may have an Mn in the range 4,000 - 10,000 g/mol. The polymer may have an Mn in the range 5,000 - 10,000 g/mol. The polymer may have an Mn in the range 6,000 - 9,000 g/mol.

The polymer may have a PD of not more than 5, e.g. in the range of 1.5 to 5. The polymer may have a PD in the range of 2 - 4. The polymer may have a PD in the range of 2 - 3.5. The polymer may have a PD in the range of 3 - 3.5. Polymers obtained at a higher PD value can be purified using standard techniques. An example of a suitable standard technique is fractionation, e.g. using a conventional separation column or separation reactor as described in EP0185458 (see page 10, lines 31 to 33 and page 11, lines 19 to 24), incorporated herein by reference, using an alcohol or acetone as a polar solvent and using neutralisation with sodium, potassium or ammonium base, to produce a split between the

lower and higher molecular weight fractions.

The polymer may be produced by copolymerisation of monomers of formula (I), (II) and (III), where the monomers were present and/or incorporated into the polymer in in specified amounts of weight % (wt%) relative to the other monomers. For example, the polymer may comprise 10 - 80 wt% of monomers of formula (I), 10 - 80 wt% of monomers of formula (II) and 10 - 80 wt% of monomers of (III). For example, the polymer may comprise 20 - 70 wt% of monomers of formula (I), 20 - 70 wt% of monomers of formula (II) and 10 - 60 wt% of monomers of (III). For example, the polymer may comprise 25 - 50 wt% of monomers of formula (I), 25 - 50 wt% of monomers of formula (II) and 25 - 50 wt% of monomers of (III). For example, the polymer may comprise 35 - 45 wt% of monomers of formula (I), 35 - 45 wt% of monomers of formula (II) and 10 - 30 wt% of monomers of (III). For example, the polymer may comprise about 40 wt% of monomers of formula (I), about 40 wt% of monomers of formula (II) and about 20 wt% of monomers of (III). For example, the polymer may comprise 30 - 36 wt% of monomers of formula (I), 30 - 36 wt% of monomers of formula (II) and 30 - 36 wt% of monomers of (III). For example, the polymer may comprise about 33 wt% of monomers of formula (I), about 33 wt% of monomers of formula (II) and about 33 wt% of monomers of (III).

METHODS

In accordance with an aspect of the invention there is provided a method of forming a polymer. The free radically induced polymerisation method typically follows the classical mechanism involving initiation, propagation, chain transfer and termination processes. The method comprises forming a polymerisation mixture comprising monomers of formulae (I), (II) and (III) and at least one radical initiator; activating the at least one radical initiator; and allowing polymerisation to proceed. The monomers of formulae (I), (II) and (III) are defined as follows:

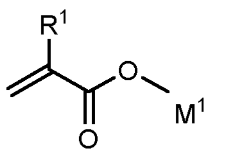

(I),

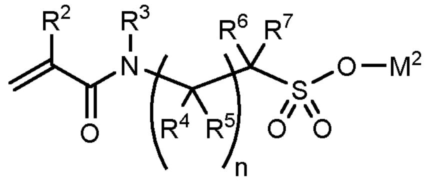

(II),

and

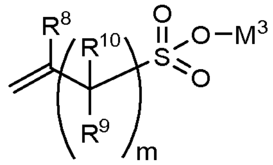

(III).

$R^1$, $R^2$ and $R^8$ are each independently selected from -H, $-CH_3$, and $-CH_2CH_3$. $R^3$, $R^4$, $R^5$, $R^6$, $R^7$, $R^9$ and $R^{10}$ are each independently selected from -H, $-(C_2-C_6)$alkyl and - $(C_1-C_8)$alkyl; m is 1, 2, 3, 4, 5, 6, 7 or 8; n is 0, 1, 2, 3, 4, 5, 6, 7 or 8; and each of $M^1$, $M^2$ and $M^3$ is independently H or a cation. The relative amounts of the monomers may comprise 1-98 wt% of (I), 1-98 wt% of (II) and 1-98 wt% of (III).

Activating the at least one radical initiator may occur before and / or during and / or after forming the polymerisation mixture, e.g. before and / or during forming the polymerisation mixture. For example, activating the at least one radical initiator may occur before forming the polymerisation mixture. The method may therefore comprise providing at least one radical initiator; activating the at least one radical initiator; mixing monomers of formulae (I), (II) and (III) with the activated at least one radical initiator to form a polymerisation mixture; and allowing polymerisation to proceed. Activating the at least one radical initiator may occur during forming the polymerisation mixture. Activating the at least one radical initiator may occur after forming the polymerisation mixture.

$R^1$, $R^2$ and $R^8$ may each be independently selected from -H and $-CH_3$. For example, $R^1$ may be -H, and / or $R^2$ may be -H, and/or $R^8$ may be -H. For example, $R^1$ may be $-CH_3$, and / or $R^2$ may be $-CH_3$, and/or $R^8$ may be $-CH_3$. $R^1$ may be -H or $-CH_3$. $R^2$ may be -H or $-CH_3$. $R^8$ may be -H or $-CH_3$.

$R^3$ may be independently selected from -H, $-CH_3$ or $-CH_2CH_3$. $R^3$ may be $-CH_3$. $R^3$ may be -H.

$R^4$ and $R^5$ may each be independently selected from -H, $-CH_3$ or $-CH_2CH_3$. $R^4$ and/or $R^5$ may be $-CH_3$. $R^4$ and/or $R^5$ may be -H. $R^4$ and/or $R^5$ may be $-CH_2CH_3$.

$R^6$ and $R^7$ may each be independently selected from -H or $-CH_3$. For example, $R^6$ may be -H, and / or $R^7$ may be -H. For example, $R^6$ may be $-CH_3$, and / or $R^7$ may be $-CH_3$.

$R^9$ and $R^{10}$ may each be independently selected from -H or -$CH_3$. For example, $R^9$ may be -H, and / or $R^{10}$ may be -H. For example, $R^9$ may be -$CH_3$, and / or $R^{10}$ may be -$CH_3$.

m may be 1, 2, 3, 4, 5 or 6. m may be 1, 2, 3 or 4; for example m may be 1, 2 or 3 (e.g. m may be 1 or 2). m may be 1. m may be 2. $R^8$, $R^9$ and $R^{10}$ may each be independently selected from -H or -$CH_3$; and m may be 1 or 2. For example, $R^8$ may be selected from -H or -$CH_3$; $R^9$ and $R^{10}$ may each be -H; and m may be 1. For example, $R^8$, $R^9$ and $R^{10}$ may each be -H; and m may be 1.

n may be 0, 1, 2, 3, 4, 5 or 6. n may be 0, 1, 2, 3 or 4 (e.g. 1, 2, 3 or 4); for example n may be 1, 2 or 3 (e.g. n may be 1 or 2). n may be 1. n may be 2. $R^2$, $R^3$, $R^6$ and $R^7$ may each be independently selected from -H, or -$CH_3$; $R^4$ and $R^5$ may each be independently selected from -H, -$CH_3$, or -$CH_2CH_3$; and n may be 1 or 2. For example, $R^2$ and $R^3$ may each be independently selected from -H, or -$CH_3$; $R^6$ and $R^7$ may be -H; $R^4$ and $R^5$ may be -$CH_3$; and n may be 1. For example, $R^2$, $R^3$, $R^6$ and $R^7$ may be -H; $R^4$ and $R^5$ may be -$CH_3$; and n may be 1.

$M^1$, $M^2$ and $M^3$ may each be independently selected from H, a monovalent cation and a divalent cation. When any of $M^1$ and/or $M^2$ and/or $M^3$ are multivalent cations (e.g. divalent or trivalent cations) it is understood that the stoichiometry of $M^1$ and/or $M^2$ and/or $M^3$ to the remainder of the components in formulae (I), (II) and (III) as appropriate are adjusted as appropriate to ensure charge neutrality in formulae (I), (II) and (III). $M^1$, $M^2$ and $M^3$ may each be independently selected from H and a monovalent cation. $M^1$, $M^2$ and $M^3$ may each be independently selected from H, $Na^+$ and $K^+$. For example, $M^1$ and/or $M^2$ and/or $M^3$ may each be H. For example, $M^1$ and/or $M^2$ and/or $M^3$ may each be $Na^+$. For example, $M^1$ and/or $M^2$ and/or $M^3$ may each be $Na^+$. $M^1$ and/or $M^2$ and/or $M^3$ may comprise a mixture of H and a cation (e.g. a mixture of H and a monovalent cation). For example, $M^1$ and/or $M^2$ and/or $M^3$ may comprise a mixture of H and $Na^+$ or $K^+$; e.g. $M^1$ and/or $M^2$ and/or $M^3$ may comprise a mixture of H and $Na^+$.

$R^1$, $R^2$, $R^3$, $R^6$, $R^7$ and $R^8$, $R^9$ and $R^{10}$ may each be independently selected from -H or -$CH_3$; $R^4$ and $R^5$ may each be independently selected from -H, -$CH_3$, or -$CH_2CH_3$; m may be 1 or 2; and n may be 1 or 2. $R^1$, $R^2$, $R^3$, $R^6$, $R^7$ and $R^8$, $R^9$ and $R^{10}$ may each be independently selected from -H or -$CH_3$; $R^4$ and $R^5$ may each be independently selected from -H, -$CH_3$, or -$CH_2CH_3$; m may be 1 or 2; n may be 1 or 2; and $M^1$, $M^2$ and $M^3$ may each be independently selected from H and a monovalent cation (e.g. $M^1$, $M^2$ and $M^3$ may each be independently selected from H, $Na^+$ and $K^+$).

$R^1$, $R^2$, $R^3$, $R^6$, $R^7$ and $R^8$, $R^9$ and $R^{10}$ may each be -H; $R^4$ and $R^8$ may each be -$CH_3$; m may be 1; and n may be 1. $R^1$, $R^2$, $R^3$, $R^6$, $R^7$ and $R^8$, $R^9$ and $R^{10}$ may each be -H; $R^4$ and $R^8$ may each be -$CH_3$; m may be 1; n may be 1; and $M^1$, $M^2$ and $M^3$ may each be independently selected from H and a monovalent cation (e.g. $M^1$, $M^2$ and $M^3$ may each be independently selected from H, $Na^+$ and $K^+$). $R^1$, $R^2$, $R^3$, $R^6$, $R^7$ and $R^8$, $R^9$ and $R^{10}$ may each be -H; $R^4$ and $R^5$ may each be -$CH_3$; m may be 1; n may be 1; and $M^1$, $M^2$ and $M^3$ may each be independently selected from H and $Na^+$ (e.g. $M^1$ may be H, $M^2$ may be $Na^+$ and $M^3$ may be $Na^+$).

The monomer of formula (I) may comprise a mixture of at least two different components (i.e. monomers) of formula (I). For example, the monomer of formula (I) may comprise two or three, e.g. two, different components of formula (I). The monomer of formula (II) may comprise a mixture of at least two different components (i.e. monomers) of formula (II). For example, the monomer of formula (II) may comprise two or three, e.g. 2, different components of formula (II). The monomer of formula (III) may comprise a mixture of at least two different components (i.e. monomers) of formula (III). For example, the monomer of formula (III) may comprise two or three, e.g. 2, different components of formula (III). When a monomer comprises more than one component of a specified formula, each of the components differs in the definition of at least one substituent.

At least one component of formula (I) may be acrylic acid and/or a salt thereof. For example, at least one component of formula (I) may be acrylic acid. For example, least one component of formula (I) may be a salt of acrylic acid. For example, formula (I) may comprise or consist of acrylic acid and at least one salt thereof.

At least one component of formula (II) may be 2-acrylamido-2-methylpropane-1-sulfonic acid and/or a salt thereof. For example, at least one component of formula (II) may be 2-acrylamido-2-methylpropane-1-sulfonic acid. For example, at least one component of formula (II) may be a salt of 2-acrylamido-2-methylpropane-1-sulfonic acid. For example, formula (II) may comprise or consist of 2-acrylamido-2-methylpropane-1-sulfonic acid and at least one salt thereof.

At least one component of formula (III) may be 2-propene-1-sulfonic acid monomer and/or a salt thereof. For example, at least one component of formula (III) may be 2-propene-1-sulfonic acid monomer. For example, at least one component of formula (III) may be a salt of 2-propene-1-sulfonic acid monomer. For example, formula (III) may comprise or consist of 2-propene-1-sulfonic acid monomer and at least one salt thereof.

The polymer formed may have a specified weight average molecular weight (Mw). The polymer may have a Mw of at least 1,000 g/mol or of at least 2,000 g/mol. For example the polymer may have a Mw of at least 3,000 g/mol or of at least 4,000 g/mol, e.g. the polymer may have a Mw of at least 5,000 g/mol. The polymer may have an Mw of not more than 150,000 g/mol, 100,000 g/mol, 75,000 g/mol, or 50,000 g/mol; e.g. an Mw of not more than 50,000 g/mol, 40,000 g/mol, 30,000 g/mol or 20,000 g/mol. For example, the polymer may have an Mw of not more than 100,000 g/mol, or an Mw of not more than 50,000 g/mol.

The polymer formed may have an Mw in the range 1,000 - 150,000 g/mol. The polymer formed may have an

Mw in the range 1,000 - 100,000 g/mol. The polymer may have an Mw in the range 5,000 - 100,000 g/mol. The polymer may have an Mw in the range 10,000 - 100,000 g/mol. The polymer may have an Mw in the range 1,000 - 50,000 g/mol. The polymer may have an Mw in the range 2,000 - 50,000 g/mol. The polymer may have an Mw in the range 5,000 - 50,000 g/mol. The polymer may have an Mw in the range 10,000 - 50,000 g/mol. The polymer may have an Mw in the range 2,000 - 40,000 g/mol. The polymer may have an Mw in the range 5,000 - 40,000 g/mol. The polymer may have an Mw in the range 10,000 - 40,000 g/mol. The polymer may have an Mw in the range 3,000 - 30,000 g/mol. The polymer may have an Mw in the range 5,000 - 30,000 g/mol. The polymer may have an Mw in the range 10,000 - 30,000 g/mol. The polymer may have an Mw in the range 5,000 - 25,000 g/mol. The polymer may have an Mw in the range 10,000 - 25,000 g/mol. The polymer may have an Mw in the range 10,000 - 15,000 g/mol.

The polymer may be formed at a specified Mn. The polymer may have an Mn in the range of 2,000 - 40,000 g/mol. The polymer may have an Mn in the range of 2,000 - 20,000 g/mol. The polymer may have an Mn in the range of 3,000 - 20,000 g/mol. The polymer may have an Mn in the range of 4,000 - 20,000 g/mol. The polymer may have an Mn in the range 2,000 - 15,000 g/mol. The polymer may have an Mn in the range 4,000 - 15,000 g/mol. The polymer may have an Mn in the range 5,000 - 15,000 g/mol. The polymer may have an Mn in the range 4,000 - 10,000 g/mol. The polymer may have an Mn in the range 5,000 - 10,000 g/mol. The polymer may have an Mn in the range 6,000 - 9,000 g/mol.

The polymer formed may have a PD of not more than 5 (e.g. in the range of 1.5 - 5). The polymer may have a PD in the range of 2 - 4. The polymer may have a PD in the range of 2 - 3.5. The polymer may have a PD in the range of 3 - 3.5. Polymers obtained at a higher PD value can be purified using standard techniques. An example of a suitable standard technique is fractionation, e.g. using a conventional separation column or separation reactor as described in EP0185458 (see page 10, lines 31 to 33 and page 11, lines 19 to 24), incorporated herein by reference, using an alcohol or acetone as a polar solvent and using neutralisation with sodium, potassium or ammonium base, to produce a split between the lower and higher molecular weight fractions Each of the obtained molecular weight fractions will comprise polymer with a lower PD than the initial polymer.

The polymerisation mixture will typically comprise solvent. The solvent will be a solvent system in which the monomers are soluble. The solvent may comprise water, water and at least one water miscible solvent, or any other suitable solvent system. The solvent may comprise water or water and at least water miscible solvent. The solvent may be an aqueous solution.

The polymerisation reaction may be carried out by any suitable polymerisation method, for example free radical polymerisation in solution, bulk or emulsion, or any living radical polymerisation or photopolymerisation. The polymerisation method may be free radical polymerisation in solution.

The relative amounts of the monomers of formula (I), (II) and (III) mixed in the polymerisation mixture may be varied. For example, the polymerisation mixture may comprise 10 - 80 wt% of monomers of formula (I), 10 - 80 wt% of monomers of formula (II) and 10 - 80 wt% of monomers of (III). For example, the polymerisation mixture may comprise 20 - 70 wt% of monomers of formula (I), 20 - 70 wt% of monomers of formula (II) and 10 - 60 wt% of monomers of (III). For example, the polymer may comprise 25 - 50 wt% of monomers of formula (I), 25 - 50 wt% of monomers of formula (II) and 25 - 50 wt% of monomers of (III). For example, the polymerisation mixture may comprise 35 - 45 wt% of monomers of formula (I), 35 - 45 wt% of monomers of formula (II) and 10 - 30 wt% of monomers of (III). For example, the polymerisation mixture may comprise about 40 wt% of monomers of formula (I), about 40 wt% of monomers of formula (II) and about 20 wt% of monomers of (III). For example, the polymerisation mixture may comprise 30 - 36 wt% of monomers of formula (I), 30 - 36 wt% of monomers of formula (II) and 30 - 36 wt% of monomers of (III). For example, the polymerisation mixture may comprise about 33 wt% of monomers of formula (I), about 33 wt% of monomers of formula (II) and about 33 wt% of monomers of (III). It should be noted that the wt% of monomer provided here relates to the relative wt% of the monomer compared to the other monomers, exclusive of any other components of the polymerisation mixture, e.g. exclusive of the activated at least one radical initiator and exclusive of any non-reactive components, such as solvents.

The at least one radical initiator may be provided in an amount of 0.05 - 5 wt% relative to the total weight of the monomers. For example, the amount of the at least one radical initiator may be 0.1 - 2.5 wt% relative to the total weight of the monomers. For example, the at least one radical initiator may be provided in an amount of 0.2 - 1.2 wt% (e.g. 0.4 to 1 wt%) relative to the total weight of the monomers. The at least one radical initiator may be provided in an amount of not more than 2.5 wt% relative to the total weight of the monomers. The at least one radical initiator may be provided in an amount of not more than 2 wt% (e.g. not more than 1.5 or 1 wt%) relative to the total weight of the monomers.

The at least one radical initiator may comprise a persulfate, a peroxide, an azo type initiator, a photoiniator, or a redox type initator. The at least one radical initiator may comprise a persulfate. The persulfate radical initiator may be or comprise potassium persulfate and/or sodium persulfate. The peroxide radical initiator may be or comprise hydrogen peroxide. The azo type initiator may be or comprise 4,4-azobis(4-cyanovaleric acid). The photoinitiator may be or comprise anthraquinone-2sulfonic acid and/or a salt (e.g. sodium salt) therefore. The redox type initiator may be or comprise a ammonium persulfate/ferrous ammonium sulfate combination.

The polymerisation mixture may further comprise at least one chain transfer agent. The chain transfer agent

acts to control the molecular weight of the generated polymers, e.g. inclusion of at least one chain transfer reagent in the polymerisation mixture would be expected to reduce the Mw for the generated polymers compared to a similar polymerisation mixture that did not comprise at least one chain transfer agent. The at least one chain transfer agent may comprise a metabisulfite. The at least one chain transfer reagent may comprise sodium metabisulfite. When the polymerisation mixture comprises at least one chain transfer agent, activing the at least one radical initiator may comprise activating the at least one chain transfer agent and / or the the at least one chain transfer agent may be separately activated.

The at least one chain transfer agent may be provided in an amount of 0.5 - 10 wt% relative to the total weight of the monomers. For example, the amount of the at least one chain transfer agent may be 0.75 - 8 wt% relative to the total weight of the monomers. For example, the at least one chain transfer agent may be provided in an amount of 1 - 5 wt% relative to the total weight of the monomers. The at least one chain transfer agent may be provided in an amount of not more than 8 wt% relative to the total weight of the monomers. The at least one chain transfer agent may be provided in an amount of not more than 5 wt% relative to the total weight of the monomers.

The monomers may be combined to form a mix of monomers before mixing the monomers with the at least one radical initiator (and at least one chain transfer reagent, when present) to form the polymerisation mixture.

When the activating occurs before forming the polymerisation mixture, the activating may comprise heating the at least one initiator (and at least one chain transfer reagent, when present) to an activation temperature. When the activating occurs during and / or after forming the polymerisation mixture, the activating may comprise heating the polymerisation mixture to an activation temperature. The activation temperature may be in the range of from ambient to a little (e.g. about 5°C) below the boiling temperature of any solvent in the polymerisation mixture. The activation temperature may be at least 25°C, e.g. at least 30°C or 40°C, optionally at least 50°C, further optionally at least 60°C. The activation temperature may be in the range of 25°C - 95°C. The activation temperature may be in the range of 30°C - 90°C, e.g. in the range of 40°C - 80°C. The activation temperature may be in the range of 50°C - 90°C, e.g. in the range of 50°C - 80°C.

Allowing polymerisation to proceed may comprise maintaining the temperature at a reaction temperature for a specified period of time. Allowing polymerisation to proceed may also comprise mixing the polymerisation mixture. Allowing polymerisation proceed may comprise maintaining the polymerisation mixture at the activation temperature and/or heating the polymerisation mixture to the activation temperature. The reaction temperature is typically at least slightly below the boiling point of any reaction solvent (e.g. water). The reaction temperature may be at least 40°C, optionally at least 50°C, further optionally at least 60°C. The reaction temperature may be up to 100°C. The reaction temperature may be in the range of 25°C - 95°C. The reaction temperature may be in the range of 30°C - 90°C, e.g. in the range of 40°C - 80°C. The reaction temperature may be in the range of 50°C - 90°C, e.g. in the range of 50°C - 80°C. The reaction temperature may be the same as the activation temperature.

Allowing polymerisation to proceed may comprise a period of time of at least 30 minutes, optionally a period of time of at least 1 hour, further optionally a period of time of at least 2 hours. Allowing polymerisation to proceed may comprise a period of time of not more than 15 hours, optionally a period of time of not more than 10 hours, further optionally a period of time of not more than 6 hours. Allowing polymerisation to proceed may comprise a period of time of from 1 to 10 hours, or a period of from 2 to 6 hours.

Allowing polymerisation to proceed may comprise supplementing the polymerisation mixture with additional amounts of the monomers of formulae (I), (II) and (III), the at least one radical initiator and (when present) the at least one chain transfer agent. Alternatively, all of the monomers of formulae (I), (II) and (III), the at least one radical initiator and (when present) the at least one chain transfer agent may be provided during the forming the polymerisation mixture.

The method may further comprise cooling the mixture to ambient temperature after allowing the polymerisation to proceed. The method may further comprising drying the polymer formed to provide the polymer in a solid form. The solid form may be a powder. Suitable methods of drying a polymer (e.g. to provide a powder) are known to those of skill in the art and include spray drying, drum drying, fluid bed drying, and freeze drying. For example, the drying may comprise spray drying.

An aspect of the invention provides a polymer obtainable by a method disclosed herein. Another aspect of the invention provides a polymer obtained by a method disclosed herein.

COMPOSITIONS

In accordance with an aspect of the invention there is provided a composition comprising a polymer as disclosed herein, or obtainable or obtained by a method disclosed herein, and a cementitious material.

The cementitious material may be selected from cements (e.g. ordinary cements, quick-hardening cements, Portland cements, alumina cement, blast furnace slag cement, flask cement and cement employed in oil well applications), gypsum plaster slurries, mortars, coal slurries, pozzolans, fly ash and concrete. The cementitious material may be a cement, a cementitious slurry or a concrete. The cementitious material may be a cement.

The amount of the polymer included in the composition may be in the range of 0.05 - 15 % w/w, expressed as

% w/w of the dry weight of the cementitious material and polymer. The composition may comprise 0.1 - 10 % w/w of the polymer, e.g. 0.1 - 5 % w/w of the polymer. For example, the composition may comprise 0.15 - 5 % w/w of the polymer, e.g. 0.15 - 3 % w/w of the polymer. For example, the composition may comprise 0.15 - 2 % w/w of the polymer, e.g. 0.15 - 1 % w/w of the polymer. For example, the composition may comprise 0.2 - 1 % w/w of the polymer, e.g. 0.2 - 0.8 % w/w of the polymer. For example, the composition may comprise 0.15 - 0.8 % w/w of the polymer, e.g. 0.15 - 0.6 % w/w of the polymer. For example, the composition may comprise about 0.25 % w/w of the polymer. For example, the polymer may comprise about 0. 5 % w/w of the polymer.

Other additives can also be added to the compositions, for example other additives that are typically included in mixtures comprising cementitious materials may be included in the present compositions. Exemplary additives include melamine sulfonate-formaldehyde condensates (SMF), napthalenesulfonate-formaldehyde condensates (SNF), modified lignosulfonates (MLS), sugars, polysaccharides, polyacrylates, setting retarders, setting accelerators, viscosity modifiers, surface active substances, shrinkage reducers, sand, gravel, pebbles, pumice and pearlite.

USES

An aspect of the invention provides the use of a polymer as disclosed herein, or obtainable or obtained by a method disclosed herein, as an additive to a cementitious material. For example, the polymer may be dry mixed with a powdered cementitious material. The use may comprise using the polymer as a dispersant for the cementitious material. The use may comprise mixing the cementitious material and polymer with a solvent (e.g. water) to provide a mortar or a slurry. The use may further comprise allowing the mortar or slurry to set.

The cementitious material may be selected from cements (e.g. ordinary cements, quick-hardening cements, Portland cements, alumina cement, blast furnace slag cement, flask cement and cement employed in oil well applications), gypsum plaster slurries, mortars, coal slurries, pozzolans, fly ash and concrete. The cementitious material may be a cement, a cementitious slurry or a concrete. The cementitious material may be a cement.

## EXAMPLES AND SYNTHESIS

GENERAL METHODS

POLYMER ANALYTICAL METHODS

The polymers may be analysed by size exclusion chromatography (SEC) also known as gel permeation chromatography (GPC) using a TSK PWXL columns (G6000 and G3000 and guard) or equivalents. The mobile phase is 0.2 molar sodium chloride (NaCl) with 0.005 molar dipotassium hydrogen phosphate ($K_2HPO_4$) in purified water that is pumped through the system at a nominal flow rate of 0.5 ml/min.

Molecular weight values and molecular weight distributions of the polymers (e.g. Mw, Mn and polydispersity) may be determined by detection using a differential refractometer (DRI) detector (although UV detection can be used in some cases), calibration of the columns are performed using a set of sodium polyacrylate standards with known molecular weight characteristics. The retention time of each standard is measured and a plot made of the logarithm of the peak molecular weight versus the retention time.

CEMENT TESTING METHODS

Two different water to cement (w/c) ratios were considered (0.33 and 0.27) and two different types of cements were also tested: cement type A (32.5 MPa) and type G (52.5 MPa). The materials used in this test work are readily available in the UK market. Portland cement (PC, class 52.5N) and (PC, class 32.5N), complying with EN 197-1:2011, were used. Both types of cement were supplied by M.J.MOULSON Builders merchant. Local gravel and sand in the UK were used in the mixes. The maximum nominal size of coarse aggregate and sand was 10 mm and 0.5 mm, respectively. All materials were tested and complying with Euro code specifications. The coarse and fine aggregates were supplied by Build It: Supplier of Building Materials.

Compressive target strengths were 74 and 82 MPa for w/c ratios of 0.33 and 0.27, respectively. The crushed aggregate had a relative density of 2.6. The percentage of fine aggregate passing through the 600 μm sieve is 40 %. The slump required is 10-30 mm. The maximum aggregate size is 10 mm.

The material quantites per cubic meter are presented in the following Table:

| w/c | Cement (kg/m$^3$) | Water (kg/m$^3$) | Sand (kg/m$^3$) | Gravel (kg/m$^3$) |
|---|---|---|---|---|
| 0.27 | 545.5 | 180 | 544.3 | 1105.2 |

(continued)

| w/c | Cement (kg/m$^3$) | Water (kg/m$^3$) | Sand (kg/m$^3$) | Gravel (kg/m$^3$) |
|---|---|---|---|---|
| 0.33 | 666.67 | 180 | 489.1 | 1039.2 |

**Standard testing procedures**

The workability of fresh concrete was tested by measuring the slump according to ASTM C143/C143M - 15. A sample of freshly mixed concrete is placed in a cone mould (see Figure 1), then fresh concrete compacted by rodding, the mould is raised, and the concrete allowed to subside. The vertical distance between the original and displaced position of the centre of the top surface of the concrete is measured and reported as the slump of concrete (see Figure 3).

Compressive strength was tested according to BS EN 12390-3:2009. 100×100×100 mm cube specimens were cast in steel moulds .Specimens were kept under ambient conditions for 24±4 hours until demoulded. Until age of tested all specimens were subjected to water curing. For each mix, the average of three specimens were calculated.

**Example 1: Synthesis of a 1:1:1 Acrylic acid:NaAMPS:SAS w/w/w terpolymer**

A 1.5L round bottom glass reactor was set up with three individual addition funnels (a monomer feed and two as initiator feeds), mechanical stirrer and a condenser. The reactor set up is placed over an oilbath heater. 106 g of deionised water is charged to a glass reactor and the agitation started, 139.5g of glacial acrylic acid, 282g of 50% aqueous 2-acrylamido-2-methylpropane-1-sulfonic acid sodium salt (NaAMPS) monomer, 400g of 35% aqueous sodium 2-propene-1-sulfonate (SAS) monomer and 312g of deionised water are charged to the monomer feed vessel. 3.31g of sodium persulfate dissolved in 59g of deionised water is charged to the initiator feed addition funnel 1. 17.38 g sodium metabisulfite dissolved in 106g of deionised is charged to initiator feed addition funnel 2. The reactor contents are heated to 70 °C using the oilbath before the commencement of the aqueous sodium metabisulfite initiator feed 1 and the aqueous sodium persulfate initiator feed 2 into the reactor (over 4.5 hrs in total). 5 minutes after starting the initiator feeds 1 and 2 are commenced; the addition of the monomer feed (over 4 hrs in total) is initiated. The reaction temperature is maintained at 70 °C throughout the polymerisation. After the last of the initiator feeds are fed into the reactor, the reactor contents are held at 70 °C for a further hour, followed by cooling of the reactor contents to ambient temperature.

**Example 2: Synthesis of a 2:2:1 Acrylic acid:NaAMPS:SAS w/w/w terpolymer**

A 1.5L round bottom glass reactor was set up with three individual addition funnels (a monomer feed and two initiator feeds), mechanical stirrer and a condenser. The reactor set up is placed over an oilbath heater.

87 g of deionised water is charged to a glass reactor and the agitation started, 139.5g of glacial acrylic acid, 282g of 50% aqueous 2-acrylamido-2-methylpropane-1-sulfonic acid sodium salt monomer, 200g of 35% aqueous sodium 2-propene-1-sulfonate monomer and 341.6g of deionised water are charged to the monomer feed vessel. 2.74g of sodium persulfate dissolved in 48.75g of deionised water is charged to the initiator feed addition funnel 1. 7.17 g sodium metabisulfite dissolved in 88g of deionised is charged to initiator feed addition funnel 2. The reactor contents are heated to 70 °C using the oilbath before the commencement of the aqueous sodium metabisulfite initiator feed 1 and the aqueous sodium persulfate initiator feed 2 into the reactor (over 4.5 hrs in total). 5 minutes after starting the initiator feeds 1 and 2 the addition of the monomer feed (over 4 hrs in total) is initiated. The reaction temperature is maintained at 70 °C throughout the polymerisation. After the last of the initiator feeds are fed into the reactor, the reactor contents are held at 70 °C for a further hour, followed by cooling of the reactor contents to ambient temperature. Figure 2 shows the GPC trace of this product.

If required, this polymer solution can be spray dried to produce a powder grade product. Analysis by gel permeation chromatography (GPC) in accordance with the Polymer Analytical Methods disclosed herein shows that there is no degradation in the molecular weight due to the spray drying process, similarly cement slump performance testing shows no drop off in cement workability due to the spray drying.

**Example 3: Cement Type A (32.5 MPa)**

The compressive strength results were taken from the average of 3 cubes, the shrinkage measurements were taken after 1 day, 7 days, 14 days, 21 days and 28 days. The tests covered the following parameters:

- 3 different plasticisers: Commercial PCE1, Commercial PCE 2 and the polymer of Example 2, and one control batch. Commercial PCE 1 and Commercial PCE 2 are commercially available PCE class benchmark products.

- One superplasticiser dosage (0.5%)

- Two different water/cement ratios: 0.27 and 0.33

**Workability 1**

Water/cement ratio: 0.33
Superplasticiser dosage: 0.25%

| Cement A (w/c = 0.33) | Superplasticiser Dosage (%) | Slump (mm) |
|---|---|---|
| Commercial PCE 1 | 0.25 | 0 |
| Commercial PCE 2 | 0.25 | 0 |
| Example 2 | 0.25 | 25 |

At a superplasticiser dosage of 0.25%, neither the Commercial PCE1 nor 2 (which are current industry leading PCE products) gave any slump performance, however the product from example 2 gave some slump performance.
Water/cement = 0.33
Superplasticiser Dosage = 0.5%
The results of the workability test are illustrated graphically in Figure 4. At a superplasticiser dosage of 0.5%, the product from example 2 gave a slump performance intermediate to that of the 2 commercial PCE products.

**Workability 2**

Water/cement ratio: 0.27
Superplasticiser Dosage = 0.25%

| Cement A (w/c = 0.27) | Superplasticiser Dosage (%) | Slump (mm) |
|---|---|---|
| Commercial PCE 1 | 0.25 | 0 |
| Commercial PCE 2 | 0.25 | 0 |
| Example 2 | 0.25 | 15 |

Water/cement = 0.27
Superplasticiser Dosage = 0.5%
The results of the workability test are illustrated graphically in Figure 5. A similar pattern in the workability at a ratio of 0.27 is observed as for the test conducted using a water/cement ratio of 0.33.

**Compressive strength 1**

Water/cement = 0.27
Superplasticiser Dosage = 0.5%
The results of compressive strength after 1 day and 28 days are shown graphically in Figure 6. All of the products gave high strength concrete at this level of water/cement ratio; the product from example 2 gave the highest value for compressive strength after 28 days, a surprising result for a polyacrylic based product when compared to commercial grade PCE type superplasticisers.

**Compressive strength 2**

Water/cement = 0.27
Superplasticiser Dosage = 0.5%
The results of compressive strength after 28 days are shown graphically in Figure 7. All of the products gave high strength concrete at this water/cement ratio.

**Shrinkage 1**

Water/cement = 0.27
Superplasticiser Dosage = 0.5%

The results of compressive strength after 28 days are shown graphically in Figure 8. At this water/cement ratio, the Example 2 polymer gave comparable or better shrinkage values when compared with Commercial PCE 1 and Commercial PCE 2.

**Shrinkage 2**

Water/cement = 0.33
Superplasticiser Dosage = 0.5%

The results of compressive strength after 28 days are shown graphically in Figure 9. At this water/cement ratio, the Example 2 polymer gave comparable or better shrinkage values when compared with Commercial PCE 1 and Commercial PCE 2.

**Example 4: Cement Type G (52.5 MPa)**

The results for cement type G cover workability, compressive strength and shrinkage. The compressive strength results were taken from the average of 3 cubes, the shrinkage measurements were taken after 1 day, 7 days, 14 days, 21 days and 28 days. The tests covered the following parameters:

- 3 Different superplasticisers (Commercial PCE 1, Commercial PCE 2 and Example 2) and one control batch
- One superplasticiser dosage (0.5%)
- Two different water/cement ratios: 0.27 and 0.33

**Workability 1**

Water/cement = 0.27
Superplasticiser Dosage = 0.5%

The results of the workability test showing slump (mm) are shown graphically in Figure 10. The Example 2 polymer gave superior cement workability compared to the commercial PCE products.

**Workability 2**

Water/cement = 0.33
Superplasticiser Dosage = 0.5%

The results of the workability test showing slump (mm) are shown graphically in Figure 11. The Example 2 polymer gave superior cement workability compared to the commercial PCE products.

**Compressive Strength 1**

Water/cement = 0.27
Superplasticiser Dosage = 0.5%
28 day strength

The results of the compressive strength test ($N/mm^2$) are shown graphically in Figure 12. The Example 2 polymer gave good cement workability compared to the commercial PCE products.

**Compressive Strength 2**

Water/cement = 0.33
Superplasticiser Dosage = 0.5%

The results of the compressive strength test (N/mm2) are shown graphically in Figure 13. The Example 2 polymer gave good cement workability compared to the commercial PCE products.

**Shrinkage**

Water/cement = 0.27
Superplasticiser Dosage = 0.5%

The results of the shrinkage test (mm/m) are shown graphically in Figure 14. The Example 2 polymer gave comparable to better performance for shrinkage compared to the commercial PCE products.

## Claims

1. A polymer for use as a cement additive, wherein the polymer is produced by copolymerisation of monomers of formula (I), (II) and (III):

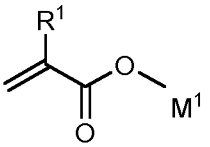 (I), 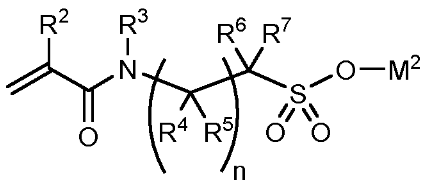 (II),

and

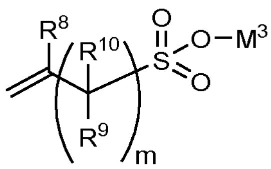 (III),

wherein:

$R^1$, $R^2$ and $R^8$ are each independently selected from -H, $-CH_3$, and $-CH_2CH_3$;
$R^3$, $R^4$, $R^5$, $R^6$, $R^7$, $R^9$ and $R^{10}$ are each independently selected from -H, $-(C_2-C_6)$alkyl and $-(C_1-C_8)$alkyl;
m is 1, 2, 3, 4, 5, 6, 7 or 8;
n is 0, 1, 2, 3, 4, 5, 6, 7 or 8; and
each of $M^1$, $M^2$ and $M^3$ is independently H or a cation, and
wherein the polymer comprises 1-98 wt% of (I), 1-98 wt% of (II) and 1-98 wt% of (III),
wherein the polymer is substantially linear.

2. The polymer of claim 1, wherein the monomer of formula (I) comprises a mixture of at least two different components of formula (I); and/or

wherein the monomer of formula (II) comprises a mixture of at least two different components of formula (II); and/or
wherein the monomer of formula (III) comprises a mixture of at least two different components of formula (III); and/or
wherein the polymer comprises 10 - 80 wt% of (I), 10 - 80 wt% of (II) and 10 - 80 wt% of (III); optionally wherein the polymer comprises 25 - 50 wt% of (I), 25 - 50 wt% of (II) and 25 - 50 wt% of (III).

3. The polymer of any preceding claim wherein $R^1$, $R^2$ and $R^8$ are each independently selected from -H and $-CH_3$; and/or

wherein $R^3$ is -H or $-CH_3$; and/or
wherein $R^4$ and $R^5$ are each independently -H, $-CH_3$ or $-CH_2CH_3$, optionally - $CH_3$; and/or
wherein $R^6$ and $R^7$ are each independently-H or $-CH_3$; and/or
wherein $R^9$ and $R^{10}$ are each independently -H or $-CH_3$.

4. The polymer of any preceding claim, wherein m is 1, 2 or 3; and/or

wherein n is 1, 2 or 3; and/or
wherein $M^1$, $M^2$ and $M^3$ are each independently selected from H and a monovalent cation; optionally wherein $M^1$, $M^2$ and $M^3$ are each independently selected from H, $Na^+$ and $K^+$; further optionally wherein $M^1$, $M^2$ and $M^3$ are each independently selected from H and $Na^+$.

**5.** The polymer of any preceding claim, wherein at least one component of formula (I) is acrylic acid or a salt thereof; and/or

wherein at least one component of formula (II) is 2-acrylamido-2-methylpropane-1-sulfonic acid or a salt thereof; and/or
wherein at least one component of formula (III) is 2-propene-1-sulfonic acid monomer or a salt thereof.

**6.** The polymer of any proceeding claim, wherein the weight average molecular weight (Mw), as analysed by gel permeation chromatography, is at least 1,000 g/mol, optionally wherein the Mw is at least 2,000 g/mol; and/or

wherein the Mw, as analysed by gel permeation chromatography, is not more than 100,000 g/mol, optionally wherein the Mw is not more than 50,000 g/mol; and/or
wherein the Mw, as analysed by gel permeation chromatography, is in the range 1,000 - 100,000 g/mol, optionally wherein the Mw is in the range 2,000 - 50,0000 g/mol; further optionally wherein the Mw, as analysed by gel permeation chromatography, is in the range 3,000 - 30,0000 g/mol.

**7.** A method of forming a polymer, comprising:

forming a polymerisation mixture comprising monomers of formulae (I), (II) and (III) and at least one radical initiator;
activating the at least one radical initiator; and
allowing polymerisation to proceed,
wherein the monomers of formulae (I), (II) and (III) are defined as follows:

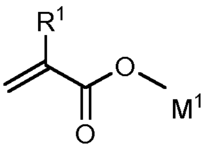
(I),
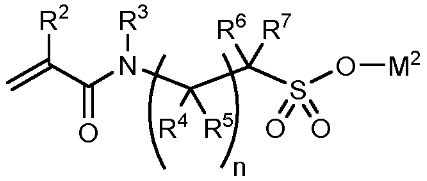
(II),

and

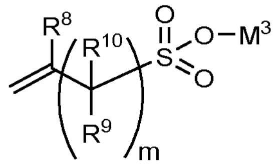
(III).

wherein:

$R^1$, $R^2$ and $R^8$ are each independently selected from -H, $-CH_3$, and $-CH_2CH_3$;
$R^3$, $R^4$, $R^5$, $R^6$, $R^7$, $R^9$ and $R^{10}$ are each independently selected from -H, $-(C_2-C_6)$alkyl and $-(C_1-C_8)$alkyl; and each of $M^1$, $M^2$ and $M^3$ is independently H or a cation, and
wherein the relative amounts of the monomers comprise 1-98 wt% of (I), 1-98 wt% of (II) and 1-98 wt% of (III).

**8.** The method of claim 7, wherein formulae (I), (II) and (III) are as further defined in any of claims 2-5; and/or

wherein the weight average molecular weight (Mw) of the polymer is as specified in any of claim 6; and/or
wherein the monomers of formulae (I), (II) and (III) are provided in relative wt% as specified in any of claim 2.

**9.** The method of claim 7 or claim 8, wherein the at least one radical initiator is provided in an amount of 0.05 to 5 wt% relative to the total weight of the monomers;

optionally wherein the at least one radical initiator is provided in an amount of 0.1 to 2.5 wt% relative to the total weight of the monomers, further optionally wherein the at least one radical initiator is provided in an amount of 0.2 to 1.2 wt% relative to the total weight of the monomers; and/or
optionally wherein the at least one radical initiator is provided in an amount of not more than 2.5 wt% relative to the total weight of the monomers, optionally wherein the at least one radical initiator is provided in an amount of not more than 2 wt% relative to the total weight of the monomers; and/or
optionally wherein the at least one radical initiator comprises a persulfate or a peroxide or an azo type initiator or a redox type initiator.

**10.** The method of any of claims 7 - 9, wherein the polymerisation mixture further comprises at least one chain transfer agent;

optionally wherein the at least one chain transfer agent comprises a metabisulfite; further optionally wherein the at least one chain transfer agent comprises sodium metabisulfite; and/or
optionally wherein the at least one chain transfer agent is provided in an amount of 0.5 - 10 wt% relative to the total weight of the monomers; further optionally wherein the at least one chain transfer agent is provided in an amount of 0.75 - 8 wt% relative to the total weight of the monomers, still further optionally wherein the at least one chain transfer agent is provided in an amount of 1 - 5 wt% relative to the total weight of the monomers.

**11.** The method of any of claims 7 - 10, wherein the monomers are combined to form a mix of monomers before mixing the monomers with the at least one radical initiator and (when present) the at least one chain transfer agent to form the polymerisation mixture; and/or

wherein activating the at least one radical initiator and (when present) the at least one chain transfer agent comprises heating the at least one initiator and (when present) the at least one chain transfer agent to an activation temperature, wherein the activation temperature is at least 40°C, optionally at least 50°C, further optionally at least 60°C; and/or
wherein the allowing polymerisation to proceed comprises maintaining the polymerisation mixture at the activation temperature and/or heating the polymerisation mixture to the activation temperature.

**12.** The method of any of claims 7 - 11, wherein the allowing polymerisation to proceed occurs over a period of time of at least 30 minutes, optionally over a period of time of at least 1 hour, further optionally over a period of time of at least 2 hours; and/or

wherein the allowing polymerisation to proceed occurs over a period of time of not more than 15 hours, optionally over a period of time of not more than 10 hours, further optionally over a period of time of not more than 6 hours; and/or
wherein the polymerisation mixture is supplemented with additional amounts of the monomers of formulae (I), (II) and (III), the at least radical initiator and (when present) the at least one chain transfer agent during the allowing the polymerisation to proceed; and/or
wherein the method further comprises cooling the mixture to ambient temperature after the allowing the polymerisation to proceed; and/or
wherein the method further comprises drying the polymer to provide the polymer in a solid form, optionally wherein the solid form is a powder; optionally wherein the drying comprises a method selected from spray drying, drum drying, fluid bed drying and freeze drying.

**13.** A polymer obtainable by a method of any of claims 7 - 12.

**14.** A composition comprising:

a polymer of any of claims 1 - 6, or of claim 13; and
a cementitious material; optionally wherein the cementitious material is a cement, a cementitious slurry, or a concrete.

**15.** Use of a polymer of any of claims 1 - 6, or of claim 13, as an additive to a cementitious material;

optionally wherein the cementitious material is a cement, a cementitious slurry, or a concrete.

## Patentansprüche

1. Polymer zur Verwendung als Zementadditiv, wobei das Polymer durch Copolymerisation von Monomeren der Formel (I), (II) und (III) hergestellt wird:

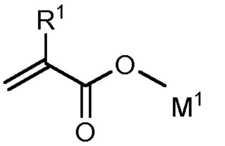

(I),

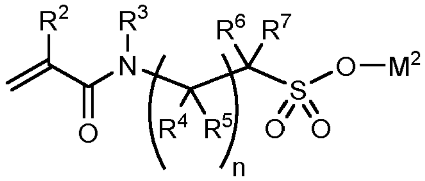

(II),

und

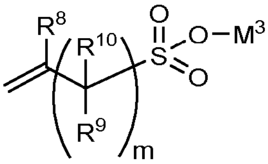

(III),

wobei:

$R^1$, $R^2$ und $R^8$ jeweils unabhängig voneinander ausgewählt sind aus -H, $-CH_3$ und $-CH_2CH_3$;
$R^3$, $R^4$, $R^5$, $R^6$, $R^7$, $R^9$ und $R^{10}$ jeweils unabhängig voneinander ausgewählt sind aus -H, $-(C_2-C_6)$-Alkyl und $-(C_1-C_8)$-Alkyl,
m 1, 2, 3, 4, 5, 6, 7 oder 8 ist;
n 0, 1, 2, 3, 4, 5, 6, 7 oder 8 ist; und
jedes von $M^1$, $M^2$ und $M^3$ unabhängig H oder ein Kation ist, und
wobei das Polymer 1 bis 98 Gew.-% von (I), 1 bis 98 Gew.-% von (II) und 1 bis 98 Gew.-% von (III) umfasst, wobei das Polymer im Wesentlichen linear ist.

2. Polymer nach Anspruch 1, wobei das Monomer der Formel (I) eine Mischung aus mindestens zwei verschiedenen Komponenten der Formel (I) umfasst; und/oder
wobei das Monomer der Formel (II) eine Mischung von mindestens zwei verschiedenen Komponenten der Formel (II) umfasst; und/oder
wobei das Monomer der Formel (III) eine Mischung von mindestens zwei verschiedenen Komponenten der Formel (III) umfasst; und/oder
wobei das Polymer 10 b i s 80 Gew-% von (I), 10 bis 80 Gew-% von (II) und 10 bis 80 Gew-% von (III) umfasst; gegebenenfalls wobei das Polymer 25 bis 50 Gew.-% von (I), 25 bis 50 Gew.-% von (II) und 25 bis 50 Gew.-% von (III) umfasst.

3. Polymer nach einem der vorhergehenden Ansprüche, wobei $R^1$, $R^2$ und $R^8$ jeweils unabhängig voneinander ausgewählt sind aus -H und $-CH_3$; und/oder
wobei $R^3$ -H oder $-CH_3$ ist; und/oder
wobei $R^4$ und $R^5$ jeweils unabhängig voneinander -H, $-CH_3$ oder $-CH_2CH_3$, gegebenenfalls $-CH_3$ sind; und/oder
wobei $R^6$ und $R^7$ jeweils unabhängig voneinander -H oder $-CH_3$ sind; und/oder
wobei $R^9$ und $R^{10}$ jeweils unabhängig voneinander -H oder $-CH_3$ sind.

4. Polymer nach einem der vorhergehenden Ansprüche, wobei m 1, 2 oder 3 ist; und/oder
wobei n 1, 2 oder 3 ist; und/oder
wobei $M^1$, $M^2$ und $M^3$ jeweils unabhängig voneinander ausgewählt sind aus H und einem einwertigen Kation; gegebenenfalls wobei $M^1$, $M^2$ und $M^3$ jeweils unabhängig voneinander ausgewählt sind aus H, $Na^+$ und $K^+$; ferner gegebenenfalls, wobei $M^1$, $M^2$ und $M^3$ jeweils unabhängig voneinander ausgewählt sind aus H und $Na^+$.

5. Polymer nach einem der vorhergehenden Ansprüche, wobei mindestens eine Komponente der Formel (I) Acrylsäure oder ein Salz davon ist; und/oder
wobei mindestens eine Komponente der Formel (II) 2-Acrylamido-2-methylpropan-1-sulfonsäure oder ein Salz davon ist; und/oder
wobei mindestens eine Komponente der Formel (III) 2-Propen-1-sulfonsäuremonomer oder ein Salz davon ist.

6. Polymer nach einem der vorhergehenden Ansprüche, wobei das durch Gelpermeationschromatographie analysierte Gewichtsmittel des Molekulargewichts (Mw) mindestens 1.000 g/mol beträgt, gegebenenfalls wobei das Mw mindestens 2.000 g/mol beträgt; und/oder
wobei das durch Gelpermeationschromatographie analysierte Mw nicht mehr als 100.000 g/mol beträgt, gegebenenfalls wobei das Mw nicht mehr als 50.000 g/mol beträgt; und/oder
wobei das durch Gelpermeationschromatographie analysierte Mw im Bereich von 1.000 bis 100.000 g/mol liegt, gegebenenfalls wobei das Mw im Bereich von 2.000 bis 50.0000 g/mol liegt; ferner gegebenenfalls, wobei das durch Gelpermeationschromatographie analysierte Mw im Bereich von 3.000 bis 30.0000 g/mol liegt.

7. Verfahren zur Bildung eines Polymers, umfassend:

Bilden einer Polymerisationsmischung, umfassend Monomere der Formeln (I), (II) und (III) und mindestens einen Radikalinitiator;
Aktivieren des mindestens einen Radikalinitiators; und
Zulassen des Fortschreitens der Polymerisation, wobei die Monomere der Formeln (I), (II) und (III) wie folgt definiert sind:

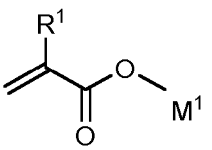 (I), 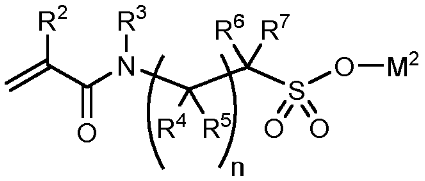 (II),

und

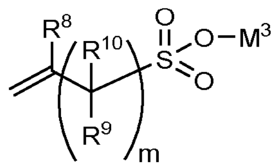 (III).

wobei:

$R^1$, $R^2$ und $R^8$ jeweils unabhängig voneinander ausgewählt sind aus -H, $-CH_3$ und $-CH_2CH_3$;
$R^3$, $R^4$, $R^5$, $R^6$, $R^7$, $R^9$ und $R^{10}$ jeweils unabhängig voneinander ausgewählt sind aus -H, $-(C_2-C_6)$-Alkyl und $-(C_1-C_8)$-Alkyl; und jedes von $M^1$, $M^2$ und $M^3$ unabhängig H oder ein Kation ist und wobei die relativen Mengen der Monomere 1 bis 98 Gew.-% (I), 1 bis 98 Gew.-% (II) und 1 bis 98 Gew.-% (III) umfassen.

8. Verfahren nach Anspruch 7, wobei die Formeln (I), (II) und (III) wie in einem der Ansprüche 2 bis 5 weiter definiert sind; und/oder
wobei das Gewichtsmittel des Molekulargewichts (Mw) des Polymers wie in einem der Ansprüche 6 angegeben ist; und/oder
wobei die Monomere der Formeln (I), (II) und (III) in relativen Gew.-% bereitgestellt werden, wie in einem der Ansprüche 2 angegeben.

9. Verfahren nach Anspruch 7 oder Anspruch 8, wobei der mindestens eine Radikalinitiator in einer Menge von 0,05 bis 5 Gew.-% bezogen auf das Gesamtgewicht der Monomere bereitgestellt wird;
gegebenenfalls wobei der mindestens eine Radikalinitiator in einer Menge von 0,1 bis 2,5 Gew.-% bezogen auf das Gesamtgewicht der Monomere bereitgestellt wird, ferner gegebenenfalls wobei der mindestens eine Radikalinitiator

in einer Menge von 0,2 bis 1,2 Gew.-% bezogen auf das Gesamtgewicht der Monomere bereitgestellt wird; und/oder gegebenenfalls wobei der mindestens eine Radikalinitiator in einer Menge von nicht mehr als 2,5 Gew.-% bezogen auf das Gesamtgewicht der Monomere bereitgestellt wird, gegebenenfalls wobei der mindestens eine Radikalinitiator in einer Menge von nicht mehr als 2 Gew.-% bezogen auf das Gesamtgewicht der Monomere bereitgestellt wird; und/oder
gegebenenfalls wobei der mindestens eine Radikalinitiator ein Persulfat oder ein Peroxid oder einen Initiator vom Azo-Typ oder einen Initiator vom Redox-Typ umfasst.

**10.** Verfahren nach einem der Ansprüche 7 bis 9, wobei das Polymerisationsgemisch ferner mindestens ein Kettenübertragungsmittel umfasst;
gegebenenfalls wobei das mindestens eine Kettenübertragungsmittel ein Metabisulfit umfasst; ferner gegebenenfalls, wobei das mindestens eine Kettenübertragungsmittel Natriummetabisulfit umfasst; und/oder
gegebenenfalls wobei das mindestens eine Kettenübertragungsmittel in einer Menge von 0,5 bis 10 Gew.-% bezogen auf das Gesamtgewicht der Monomere bereitgestellt wird; ferner gegebenenfalls, wobei das mindestens eine Kettenübertragungsmittel in einer Menge von 0,75 bis 8 Gew.-% bezogen auf das Gesamtgewicht der Monomere bereitgestellt wird, noch ferner gegebenenfalls, wobei das mindestens eine Kettenübertragungsmittel in einer Menge von 1 bis 5 Gew.-% bezogen auf das Gesamtgewicht der Monomere bereitgestellt wird.

**11.** Verfahren nach einem der Ansprüche 7 bis 10, wobei die Monomere kombiniert werden, um eine Mischung von Monomeren zu bilden, bevor die Monomere mit dem mindestens einen Radikalinitiator und (falls vorhanden) dem mindestens einen Kettenübertragungsmittel gemischt werden, um das Polymerisationsgemisch zu bilden; und/oder wobei das Aktivieren des mindestens einen Radikalinitiators und (falls vorhanden) des mindestens einen Kettenübertragungsmittels das Erhitzen des mindestens einen Initiators und (falls vorhanden) des mindestens einen Kettenübertragungsmittels auf eine Aktivierungstemperatur umfasst, wobei die Aktivierungstemperatur mindestens 40 °C, gegebenenfalls mindestens 50 °C, ferner gegebenenfalls mindestens 60 °C beträgt; und/oder
wobei das Zulassen des Fortschreitens der Polymerisation das Halten des Polymerisationsgemisches auf der Aktivierungstemperatur und/oder das Erhitzen des Polymerisationsgemisches auf die Aktivierungstemperatur umfasst.

**12.** Verfahren nach einem der Ansprüche 7 b i s 11, wobei das Zulassen des Fortschreitens der Polymerisation über einen Zeitraum von mindestens 30 Minuten, gegebenenfalls über einen Zeitraum von mindestens 1 Stunde, ferner gegebenenfalls über einen Zeitraum von mindestens 2 Stunden erfolgt; und/oder
wobei das Zulassen des Fortschreitens der Polymerisation über einen Zeitraum von nicht mehr als 15 Stunden, gegebenenfalls über einen Zeitraum von nicht mehr als 10 Stunden, ferner gegebenenfalls über einen Zeitraum von nicht mehr als 6 Stunden erfolgt; und/oder
wobei das Polymerisationsgemisch mit zusätzlichen Mengen der Monomere der Formeln (I), (II) und (III), des mindestens einen Radikalinitiators und (falls vorhanden) des mindestens einen Kettenübertragungsmittels während des Zulassens des Fortschreitens der Polymerisation ergänzt wird; und/oder
wobei das Verfahren ferner das Abkühlen der Mischung auf Umgebungstemperatur nach dem Zulassen des Fortschreitens der Polymerisation umfasst; und/oder
wobei das Verfahren ferner das Trocknen des Polymers umfasst, um das Polymer in fester Form bereitzustellen, gegebenenfalls wobei die feste Form ein Pulver ist; gegebenenfalls wobei das Trocknen ein Verfahren umfasst, das ausgewählt ist aus Sprühtrocknung, Trommeltrocknung, Fließbetttrocknung und Gefriertrocknung.

**13.** Polymer, erhältlich durch ein Verfahren nach einem der Ansprüche 7 bis 12.

**14.** Zusammensetzung, umfassend:

ein Polymer nach einem der Ansprüche 1 bis 6 oder nach Anspruch 13; und
ein zementartiges Material; gegebenenfalls wobei das zementartige Material ein Zement, eine zementartige Aufschlämmung oder ein Beton ist.

**15.** Verwendung eines Polymers nach einem der Ansprüche 1 bis 6 oder nach Anspruch 13 als Additiv zu einem zementartigen Material;
gegebenenfalls wobei das zementartige Material ein Zement, eine zementartige Aufschlämmung oder ein Beton ist.

## Revendications

1. Polymère destiné à être utilisé comme additif pour ciment, dans lequel le polymère est produit par la copolymérisation de monomères de formule (I), (II) et (III) :

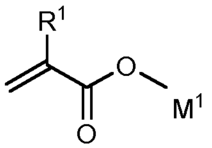 (I), 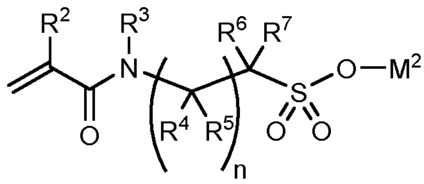 (II),

et

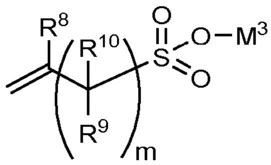 (III),

dans lesquelles :

$R^1$, $R^2$ et $R^8$ sont chacun indépendamment choisis parmi -H, $-CH_3$, et $-CH_2CH_3$ ;
$R^3$, $R^4$, $R^5$, $R^6$, $R^7$, $R^9$ et $R^{10}$ sont chacun indépendamment choisis parmi -H, $-(C_2-C_6)$alkyl et $-(C_1-C_8)$alkyl ;
m vaut 1, 2, 3, 4, 5, 6, 7 ou 8 ;
n vaut 0, 1, 2, 3, 4, 5, 6, 7 ou 8 ; et
chaque $M^1$, $M^2$ et $M^3$ représente indépendamment H ou un cation, et
dans lequel le polymère comprend de 1 à 98 % en poids de (I), de 1 à 98 % en poids de (II) et de 1 à 98 % en poids de (III), dans lequel le polymère est sensiblement linéaire.

2. Polymère selon la revendication 1, dans lequel le monomère de formule (I) comprend un mélange d'au moins deux composants différents de formule (I) ; et/ou
dans lequel le monomère de formule (II) comprend un mélange d'au moins deux composants différents de formule (II) ; et/ou
dans lequel le monomère de formule (III) comprend un mélange d'au moins deux composants différents de formule (III) ; et/ou
dans lequel le polymère comprend de 10 à 80 % en poids de (I), de 10 à 80 % en poids de (II) et de 10 à 80 % en poids de (III) ; dans lequel le polymère comprend éventuellement de 25 à 50 % en poids de (I), de 25 à 50 % en poids de (II) et de 25 à 50 % en poids de (III).

3. Polymère selon l'une quelconque des revendications précédentes, dans lequel $R^1$, $R^2$ et $R^8$ sont chacun indépendamment choisis parmi -H et $-CH_3$ ; et/ou
dans lequel $R^3$ représente -H ou $-CH_3$ ; et/ou
dans lequel $R^4$ et $R^5$ représentent chacun indépendamment -H, $-CH_3$ ou $-CH_2CH_3$, éventuellement $-CH_3$ ; et/ou
dans lequel $R^6$ et $R^7$ représentent chacun indépendamment -H ou $-CH_3$ ; et/ou
dans lequel $R^9$ et $R^{10}$ représentent chacun indépendamment -H ou $-CH_3$.

4. Polymère selon l'une quelconque des revendications précédentes, dans lequel m vaut 1, 2 ou 3 ; et/ou
dans lequel n vaut 1, 2 ou 3 ; et/ou
dans lequel $M^1$, $M^2$ et $M^3$ sont chacun indépendamment choisis parmi H et un cation monovalent ; dans lequel $M^1$, $M^2$ et $M^3$ sont chacun éventuellement indépendamment choisis parmi H, $Na^+$ et $K^+$ ; en outre dans lequel $M^1$, $M^2$ et $M^3$ sont chacun éventuellement indépendamment choisis parmi H et $Na^+$.

5. Polymère selon l'une quelconque des revendications précédentes, dans lequel au moins un composant de formule (I) est l'acide acrylique ou un sel de celui-ci ; et/ou
dans lequel au moins un composant de formule (II) est l'acide 2-acrylamido-2-méthylpropane-1-sulfonique ou un

sel de celui-ci ; et/ou
dans lequel au moins un composant de formule (III) est un monomère de l'acide 2-propène-1-sulfonique ou un sel de celui-ci.

**6.** Polymère selon l'une quelconque des revendications précédentes, dans lequel le poids moléculaire moyen en poids (Mw), tel qu'analysé par chromatographie par perméation de gel, est au moins 1 000 g/mol, dans lequel le Mw est éventuellement au moins 2 000 g/mol ; et/ou
dans lequel le Mw, tel qu'analysé par chromatographie par perméation de gel, est inférieur ou égal à 100 000 g/mol, dans lequel le Mw est éventuellement inférieur ou égal à 50 000 g/mol ; et/ou
dans lequel le Mw, tel qu'analysé par chromatographie par perméation de gel, se situe dans la plage allant de 1 000 à 100 000 g/mol, dans lequel le Mw se situe éventuellement dans la plage allant de 2 000 à 50 0000 g/mol ; en outre dans lequel le Mw, tel qu'analysé par chromatographie par perméation de gel, se situe éventuellement dans la plage allant de 3 000 à 30 0000 g/mol.

**7.** Procédé de formation d'un polymère, comprenant :

la formation d'un mélange de polymérisation comprenant les monomères de formules (I), (II) et (III) et au moins un initiateur radicalaire ;
l'activation de l'au moins un initiateur radicalaire ; et
le fait de permettre à la polymérisation de se poursuivre, dans lequel les monomères de formules (I), (II) et (III) sont tels que définis comme suit :

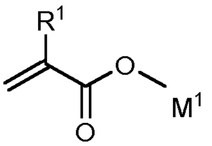
(I),

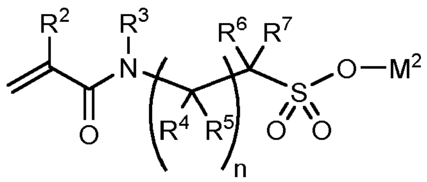
(II),

et

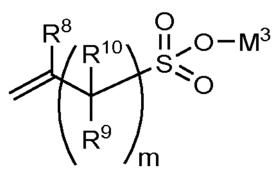
(III)

dans lesquelles :

$R^1$, $R^2$ et $R^8$ sont chacun indépendamment choisis parmi -H, $-CH_3$, et $-CH_2CH_3$ ;
$R^3$, $R^4$, $R^5$, $R^6$, $R^7$, $R^9$ et $R^{10}$ sont chacun indépendamment choisis parmi -H, $-(C_2-C_6)$alkyle et $-(C_1-C_8)$alkyle ; et chaque $M^1$, $M^2$ et $M^3$ représente indépendamment H ou un cation, et dans lequel les quantités relatives des monomères comprennent de 1 à 98 % en poids de (I), de 1 à 98 % en poids de (II) et de 1 à 98 % en poids de (III).

**8.** Procédé selon la revendication 7, dans lequel les formules (I), (II) et (III) sont en outre définies selon l'une quelconque des revendications 2 à 5 ; et/ou
dans lequel le poids moléculaire moyen en poids (Mw) du polymère est tel que spécifié dans l'une quelconque de la revendication 6 ; et/ou
dans lequel les monomères de formules (I), (II) et (III) sont présents en termes de pourcentage relatif en poids tels que spécifiés dans l'une quelconque de la revendication 2.

**9.** Procédé selon la revendication 7 ou la revendication 8, dans lequel l'au moins un initiateur radicalaire est présent en une quantité allant de 0,05 à 5 % en poids par rapport au poids total des monomères ;
dans lequel l'au moins un initiateur radicalaire est éventuellement présent en une quantité allant de 0,1 à 2,5 % en poids par rapport au poids total des monomères, en outre dans lequel l'au moins un initiateur radicalaire est éventuellement présent en une quantité allant de 0,2 à 1,2 % en poids par rapport au poids total des monomères ; et/ou dans lequel l'au moins un initiateur radicalaire est éventuellement présent en une quantité inférieure ou égale à 2,5 % en poids par rapport au poids total des monomères, dans lequel l'au moins un initiateur radicalaire est éventuellement présent en une quantité inférieure ou égale à 2 % en poids par rapport au poids total des monomères ; et/ou dans lequel l'au moins un initiateur radicalaire comprend éventuellement un persulfate ou un peroxyde ou un initiateur de type azo ou un initiateur de type redox.

**10.** Procédé selon l'une quelconque des revendications 7 à 9, dans lequel le mélange de polymérisation comprend en outre au moins un agent de transfert de chaîne ;
dans lequel l'au moins un agent de transfert de chaîne comprend éventuellement un métabisulfite ; éventuellement en outre dans lequel l'au moins un agent de transfert de chaîne comprend un métabisulfite de sodium ; et/ou
dans lequel l'au moins un agent de transfert de chaîne est éventuellement présent en une quantité allant de 0,5 à 10 % en poids par rapport au poids total des monomères ; en outre dans lequel l'au moins un agent de transfert de chaîne est éventuellement présent en une quantité allant de 0,75 à 8 % en poids par rapport au poids total des monomères, éventuellement en outre dans lequel l'au moins un agent de transfert de chaîne est encore présent en une quantité allant de 1 à 5 % en poids par rapport au poids total des monomères.

**11.** Procédé selon l'une quelconque des revendications 7 à 10, dans lequel les monomères sont combinés pour former un mélange de monomères avant le mélange des monomères avec l'au moins un initiateur radicalaire et (lorsqu'il est présent) l'au moins un agent de transfert de chaîne afin de former le mélange de polymérisation ; et/ou
dans lequel l'activation de l'au moins un initiateur radicalaire et (lorsqu'il est présent) l'au moins un agent de transfert de chaîne comprend le chauffage de l'au moins un initiateur et (lorsqu'il est présent) l'au moins un agent de transfert de chaîne à une température d'activation, dans lequel la température d'activation est au moins 40 °C, éventuellement au moins 50 °C, éventuellement en outre au moins 60 °C ; et/ou
dans lequel le fait de permettre à la polymérisation de se poursuivre comprend le fait de maintenir le mélange de polymérisation à la température d'activation et/ou le chauffage du mélange de polymérisation à la température d'activation.

**12.** Procédé selon l'une quelconque des revendications 7 à 11, dans lequel le fait de permettre à la polymérisation de se poursuivre se produit pendant une période de temps d'au moins 30 minutes, éventuellement pendant une période de temps d'au moins 1 heure, éventuellement en outre pendant une période de temps d'au moins 2 heures ; et/ou
dans lequel le fait de permettre à la polymérisation de se poursuivre se produit pendant une période de temps inférieure ou égale à 15 heures, éventuellement pendant une période inférieure ou égale à 10 heures, éventuellement en outre pendant une période inférieure ou égale à 6 heures ; et/ou
dans lequel le mélange de polymérisation est complété par des quantités supplémentaires des monomères de formules (I), (II) et (III), l'au moins un initiateur radicalaire et (lorsqu'il est présent) l'au moins un agent de transfert de chaîne permettant à la polymérisation de se poursuivre ; et/ou
dans lequel le procédé comprend en outre le refroidissement du mélange à température ambiante après le fait de permettre à la polymérisation de se poursuivre ; et/ou
dans lequel le procédé comprend en outre le séchage du polymère afin d'obtenir le polymère sous forme solide, dans lequel la forme solide est éventuellement une poudre ; dans lequel le séchage comprend éventuellement un procédé choisi parmi le séchage par pulvérisation, le séchage au tambour, le séchage sur lit fluidisé et la lyophilisation.

**13.** Polymère pouvant être obtenu par un procédé selon l'une quelconque des revendications 7 à 12.

**14.** Composition comprenant :

un polymère selon l'une quelconque des revendications 1 à 6, ou selon la revendication 13 ; et
un matériau cimentaire ; dans laquelle le matériau cimentaire est éventuellement un ciment, une boue cimentaire, ou un béton.

**15.** Utilisation d'un polymère selon l'une quelconque des revendications 1 à 6, ou selon la revendication 13, en tant qu'additifs à un matériau cimentaire ;
dans lequel le matériau cimentaire est éventuellement un ciment, une boue cimentaire, ou un béton.

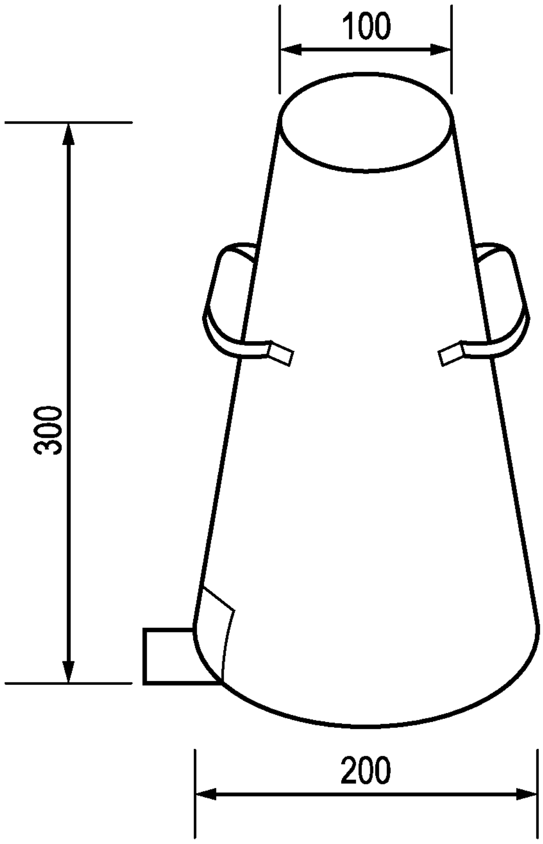


FIG. 1

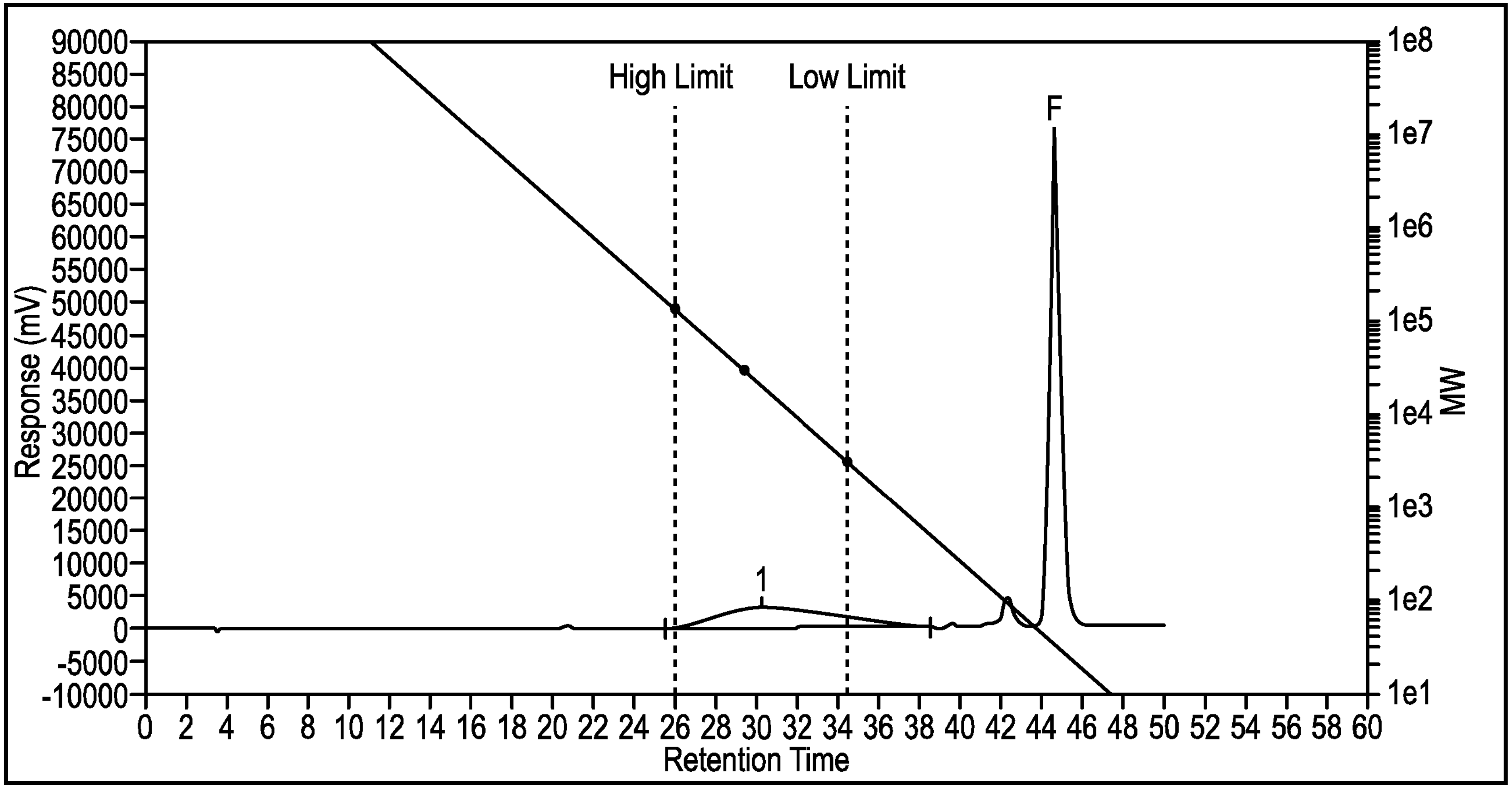


| Peak No. | Peak | Start RT | Max. RT | End RT | Baseline Start RT | Baseline End RT | Is FRM | Mp | Mn | Mw | Mz | PD |
|---|---|---|---|---|---|---|---|---|---|---|---|---|
| 1 | | 25.3872 | 30.1608 | 38.5128 | 25.3872 | 38.5128 | ☐ | 19870 | 6558 | 20843 | 43413 | 3.1783 |
| 2 | | 43.5024 | 44.5680 | 46.4616 | 43.5024 | 46.4616 | ☑ | 0 | 0 | 0 | 0 | 0.0000 |

FIG. 2

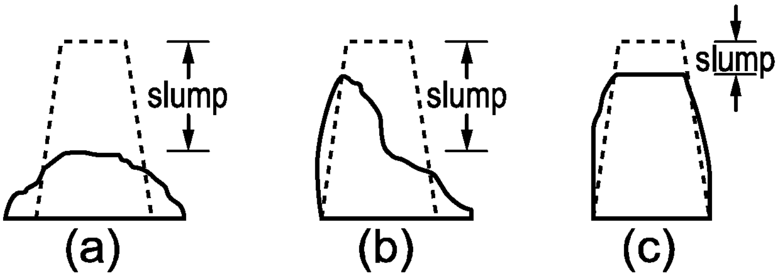


FIG. 3

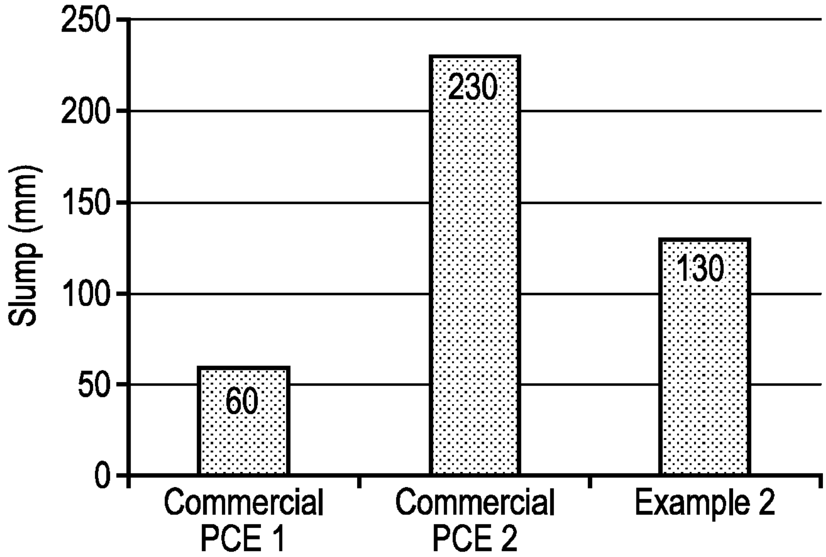


FIG. 4

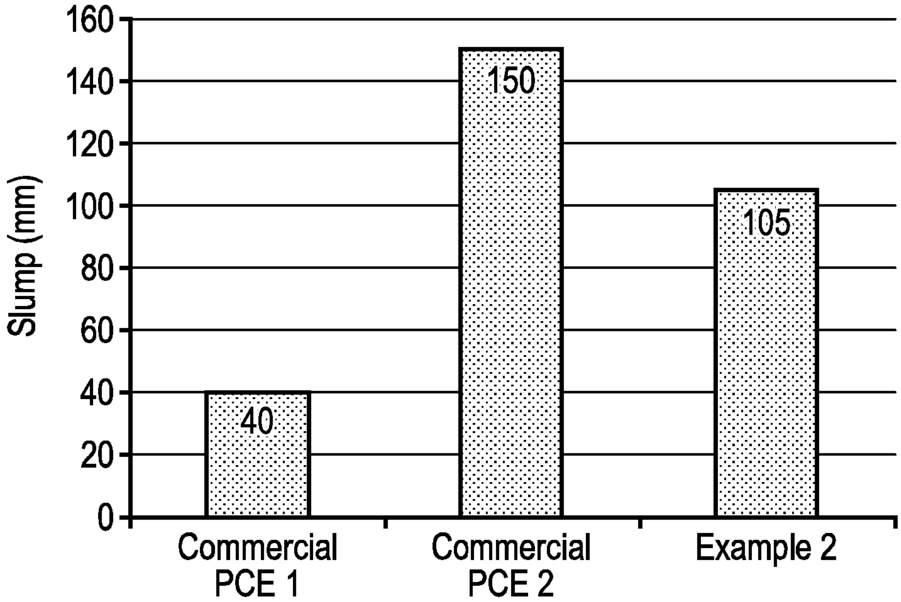


FIG. 5

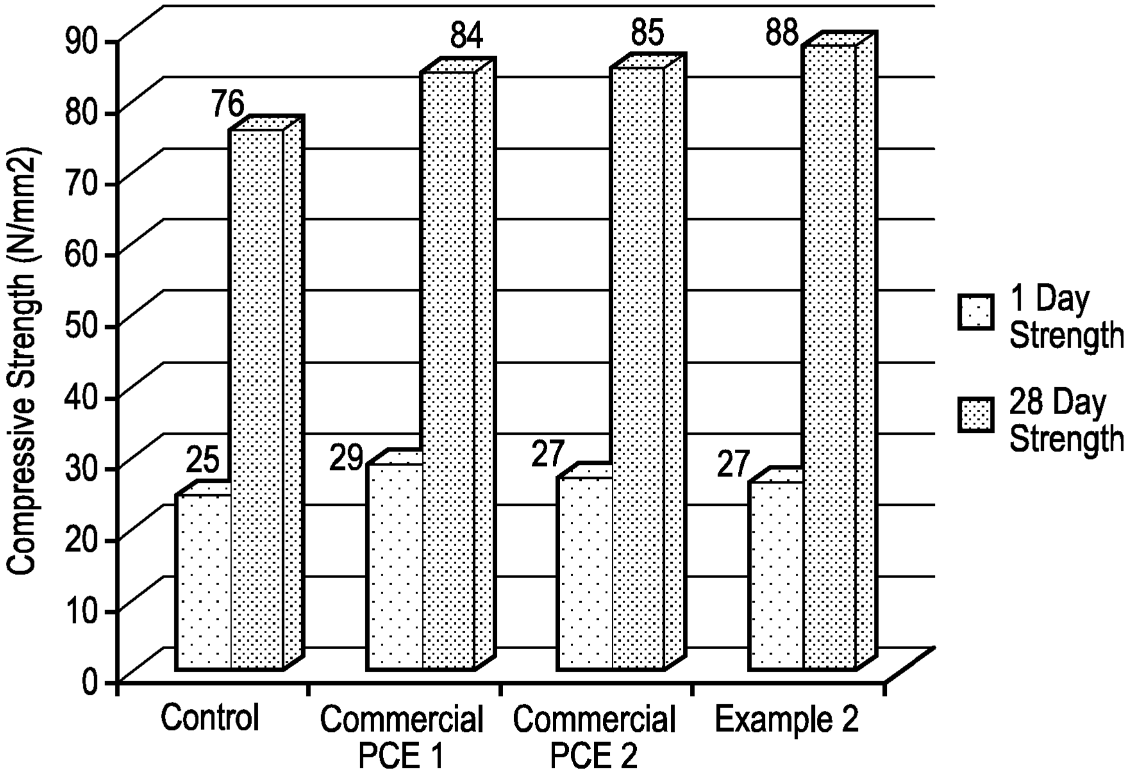
Compressive Strength (N/mm2)
0
10
20
30
40
50
60
70
80
90
25
76
29
84
27
85
27
88
Control
Commercial PCE 1
Commercial PCE 2
Example 2
1 Day Strength
28 Day Strength

FIG. 6

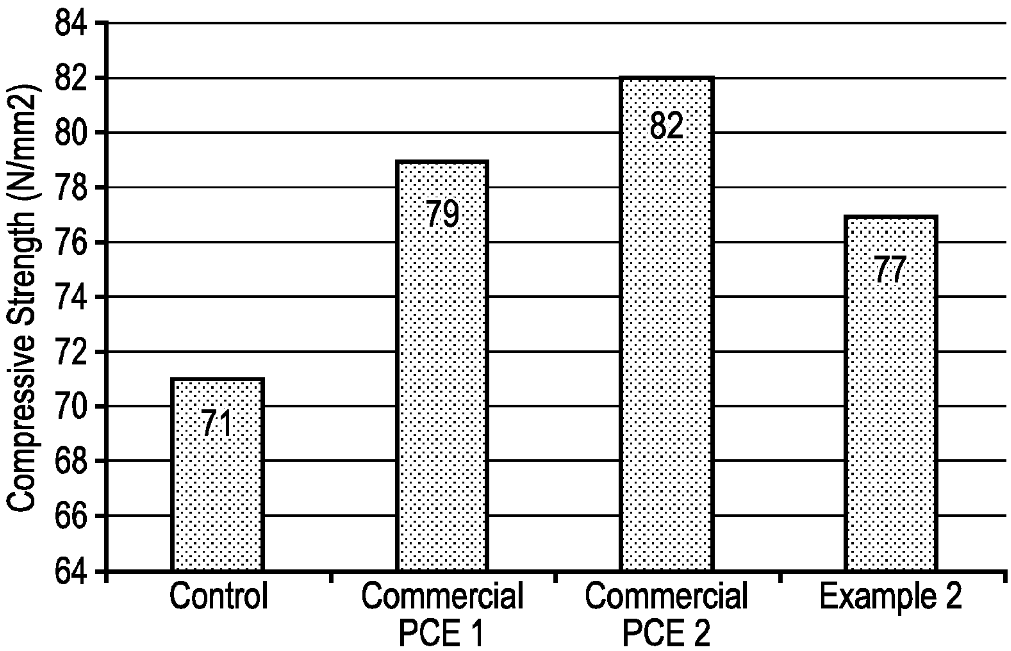
Compressive Strength (N/mm2)
64
66
68
70
72
74
76
78
80
82
84
71
79
82
77
Control
Commercial PCE 1
Commercial PCE 2
Example 2

FIG. 7

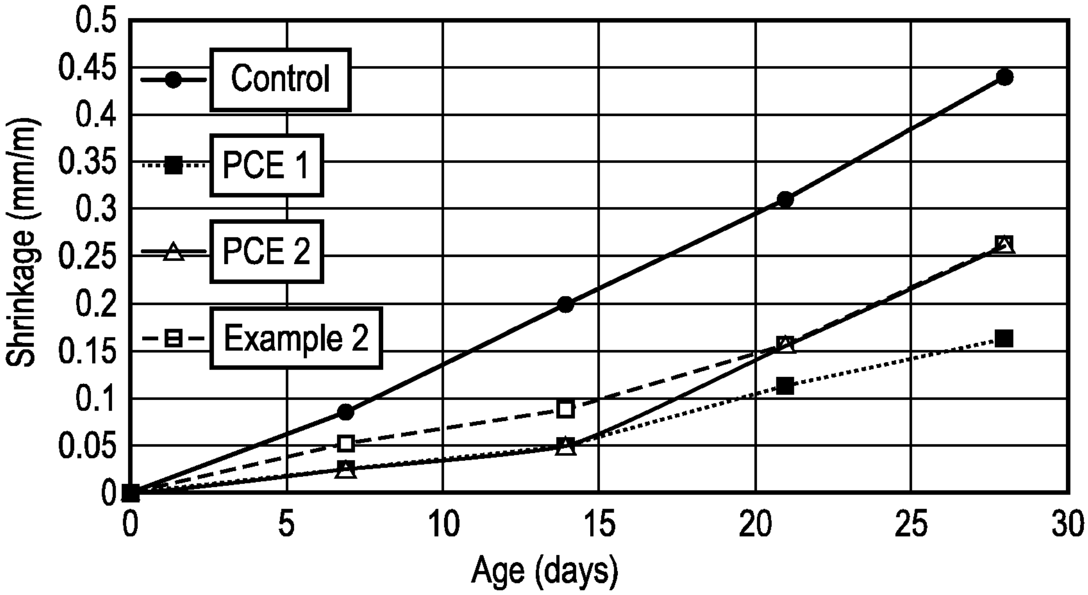
0.5
0.45
0.4
0.35
0.3
0.25
0.2
0.15
0.1
0.05
0
Shrinkage (mm/m)
Control
PCE 1
PCE 2
Example 2
0
5
10
15
20
25
30
Age (days)

FIG. 8

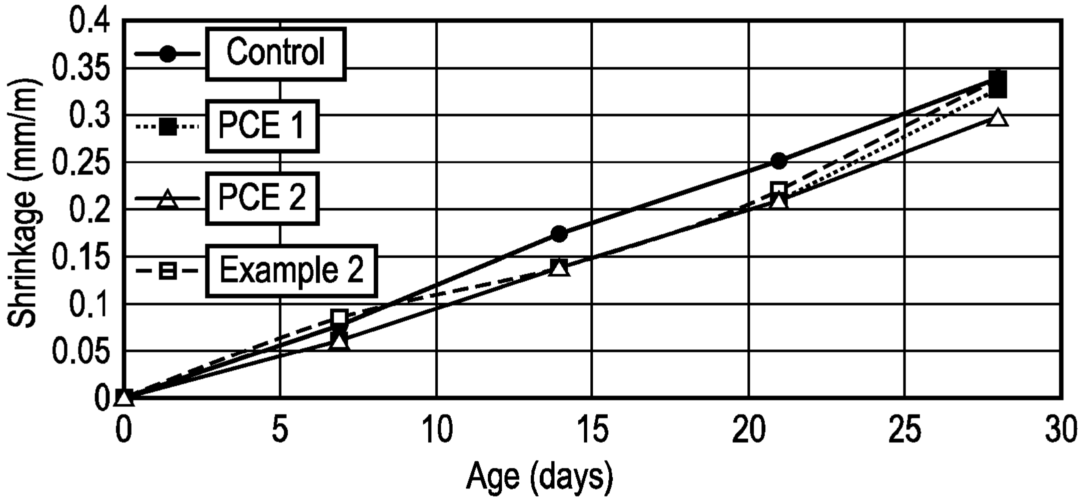
0.4
0.35
0.3
0.25
0.2
0.15
0.1
0.05
0
Shrinkage (mm/m)
Control
PCE 1
PCE 2
Example 2
0
5
10
15
20
25
30
Age (days)

FIG. 9

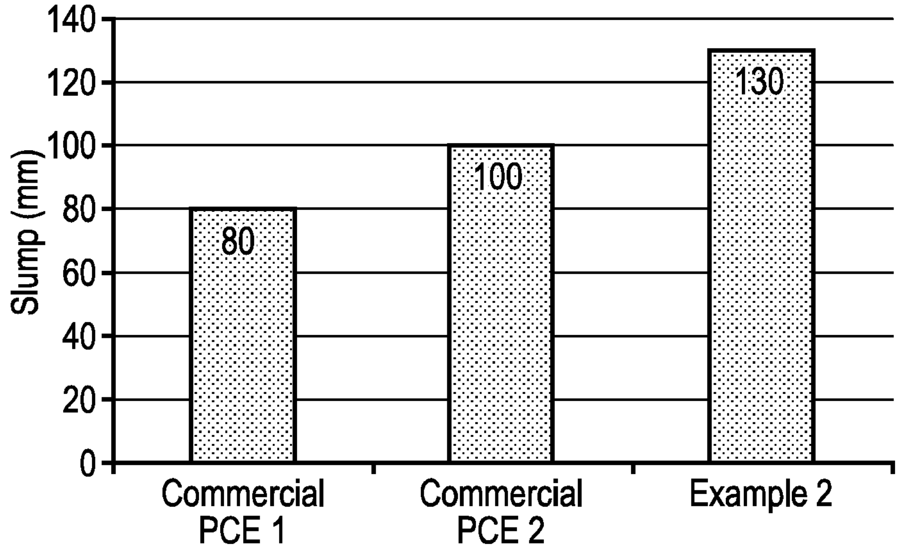
140
120
100
80
60
40
20
0
Slump (mm)
80
100
130
Commercial PCE 1
Commercial PCE 2
Example 2

FIG. 10

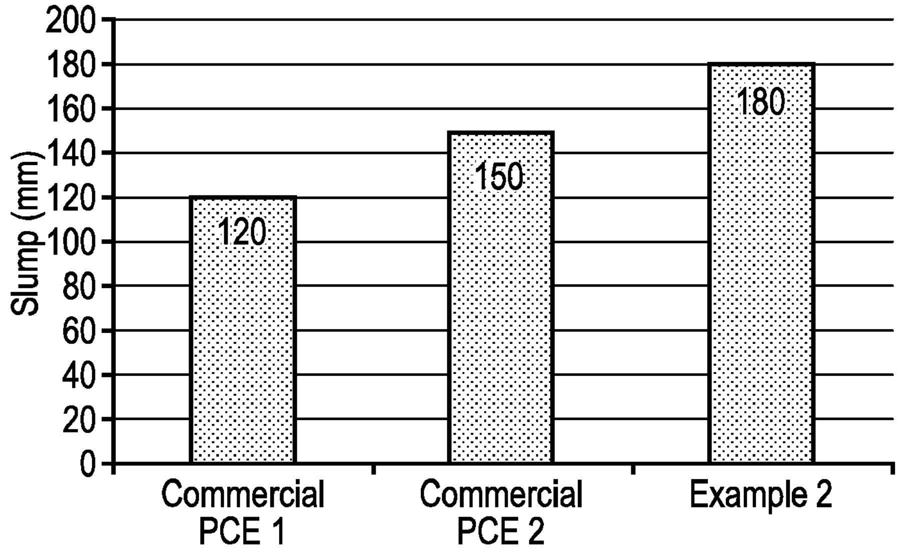
200
180
160
140
120
100
80
60
40
20
0
Slump (mm)
120
150
180
Commercial PCE 1
Commercial PCE 2
Example 2

FIG. 11

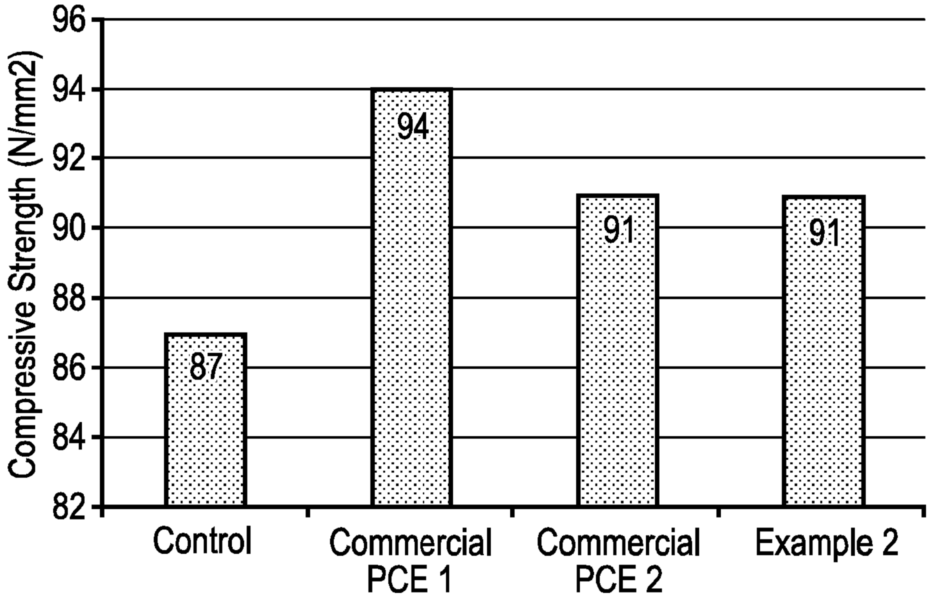
96
94
92
90
88
86
84
82
Compressive Strength (N/mm2)
87
94
91
91
Control
Commercial PCE 1
Commercial PCE 2
Example 2

FIG. 12

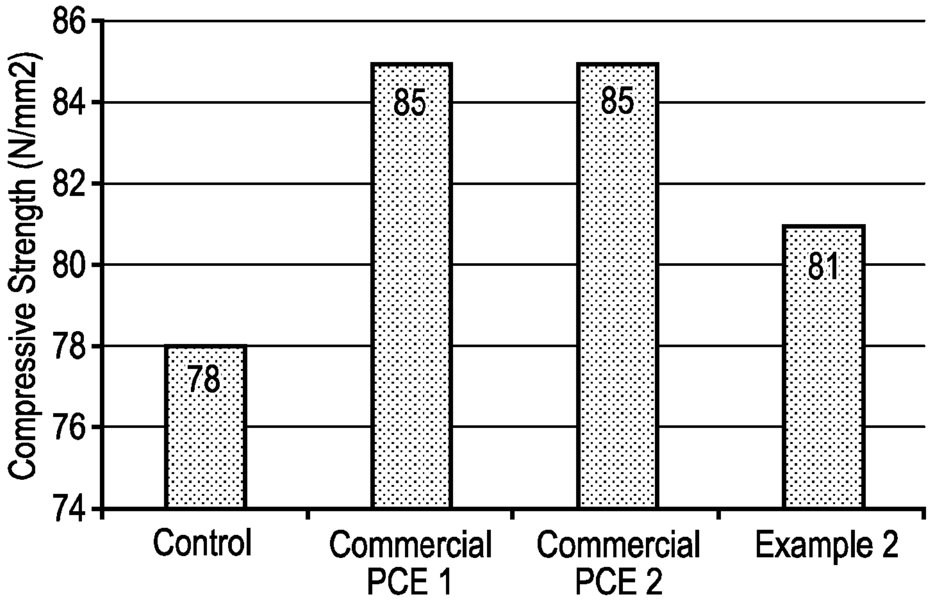
86
84
82
80
78
76
74
Compressive Strength (N/mm2)
78
85
85
81
Control
Commercial PCE 1
Commercial PCE 2
Example 2

FIG. 13

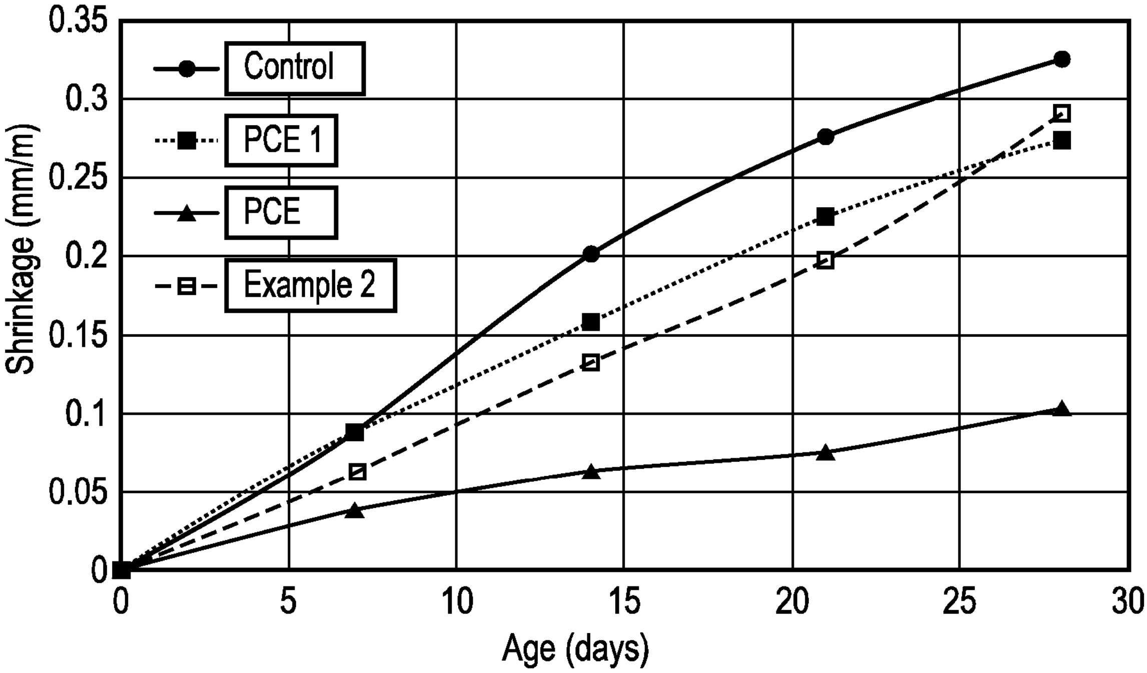
Control
PCE 1
PCE
Example 2
0.35
0.3
0.25
0.2
0.15
0.1
0.05
0
Shrinkage (mm/m)
0
5
10
15
20
25
30
Age (days)

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5614017 A
- JP 05032441 B
- JP 60171256 B
- US 20130231415 A
- US 2013231415 A
- EP 0549280 A
- CN 102250295
- EP 0185458 A


### Non-patent literature cited in the description


- **NAWA, T.** *Journal of Advanced Concrete Technology,* 2006, vol. 4 (2), 225-232